# EUROPÄISCHE PATENTSCHRIFT

(11) **EP 3 227 594 B1**
(45) Veröffentlichungstag und Bekanntmachung des Hinweises auf die Patenterteilung: **06.07.2022**
(21) Anmeldenummer: 15804677.1
(22) Anmeldetag: 02.12.2015
(51) Int. Cl.: B05B 1/04, F16L 37/23, B05B 12/14, B05B 13/04, F16B 21/16

(54) **SCHNELLWECHSELDÜSE, ZUGEHÖRIGES DÜSEN-SCHNELLWECHSELSYSTEM UND ZUGEHÖRIGES APPLIKATIONSSYSTEM**
QUICK-CHANGE NOZZLE, ASSOCIATED NOZZLE QUICK-CHANGE SYSTEM AND ASSOCIATED APPLICATION SYSTEM
BUSE À CHANGEMENT RAPIDE, SYSTÈME DE CHANGEMENT RAPIDE DE BUSE ASSOCIÉ ET SYSTÈME D'APPLICATION ASSOCIÉ

(30) Priorität: 03.12.2014 DE 102014017856
(43) Veröffentlichungstag der Anmeldung: 11.10.2017
(73) Patentinhaber: Dürr Systems AG, 74321 Bietigheim-Bissingen (DE)
(72) Erfinder: KRAFT, Bernd, 71711 Steinheim-Höpfigheim (DE); STIEGLER, Martin, 71717 Beilstein (DE); MARTIN, Herbert, 71384 Weinstadt-Grossheppach (DE); RADEMACHER, Lothar, 74321 Bietigheim-Bissingen (DE); SCHWAGER, Werner, 71642 Ludwigsburg (DE)
(74) Vertreter: v. Bezold & Partner Patentanwälte - PartG mbB
(86) Internationale Anmeldenummer: PCT/EP2015/002418
(87) Internationale Veröffentlichungsnummer: WO 2016/087041

(56) Entgegenhaltungen:
- WO-A1-2014/147183
- DE-A1- 19 608 085
- DE-A1-102007 038 791
- DE-U1- 20 010 075
- FR-A1- 2 872 717
- US-A- 4 717 077
- US-A1- 2005 184 086

## Beschreibung

Die Erfindung betrifft eine wechselbare Düse, insbesondere eine Schnellwechseldüse, zum Applizieren eines Auftragsmittels auf ein Bauteil, ein zugehöriges Wechselsystem, insbesondere Düsen-Schnellwechselsystem, und ein zugehöriges Applikationssystem.

Zum allgemeinen Stand der Technik kann zunächst auf die DE 200 10 075 U1 verwiesen werden. Sie offenbart eine auswechselbare Schlitzdüse, mit der beispielsweise ein Gemisch aus Luft und Wasser erzeugt und versprüht werden soll. Die Düse besteht aus einem Düsenmundstück, das lösbar an einem Anschlussstück befestigt wird, wobei axiale Kodierzapfen des Mundstücks in der Art einer Schlüssel-/Schlosskodierung passend in entsprechende Vertiefungen des Anschlussstücks eingreifen, so dass nur zu dem Anschlussstück passende Düsen in eindeutig definierter Ausrichtung eingesetzt werden können.

Insbesondere Düsen zum Applizieren eines Dichtmaterials zur Nahtabdichtung von Kraftfahrzeugkarosseriebauteilen müssen in regelmäßigen Abständen gewechselt werden, z. B. aus Verschleißgründen oder weil ein veränderter Einsatzzweck eine andere Düse erfordert. Aus der DE 10 2007 038 791 A1 ist ein Werkzeugwechselsystem bekannt. Das Wechselsystem umfasst ein Austragsdüsenteil mit einem roboterseitigen Hauptteil und einem damit verbundenen Austragsdüsenteil. Das Austragsdüsenteil umfasst eine Düse und ist über ein Kopplungssystem, insbesondere einen Bajonettverschluss, lösbar mit dem Hauptteil verbunden. Das Wechselsystem ist relativ voluminös aufgebaut. Der Düsenwechsel kann auf zweierlei Arten erfolgen. Einerseits, indem die Düse gemeinsam mit dem Austragsdüsenteil entfernt wird. Zum anderen, indem das Austragsdüsenteil mittels eines Schraubendrehers auseinandergeschraubt wird, eine Klemmplatte entfernt wird und daraufhin die Düse entfernt wird.

US 2005/184086 A1 offenbart eine Düsenanordnung beispielsweise für die Applikation von Klebstoffen mit einer Düse, die in ein gesondertes Dispensingmodul eingeschraubt ist, welches seinerseits auswechselbar an einen Applikator angeschraubt ist.

FR 2 872 717 A1 offenbart eine Sprühpistole beispielsweise für Farbe, Lack oder Email mit einem Sprühpistolenkörper, der mittels eines Verriegelungsbolzens und einer Schraube an einer die Versorgungsleitungen der Sprühpistole enthaltenden Basis montiert ist, welche ihrerseits in ausgerichteter Weise an einem Tragarm montierbar ist.

WO 2014/147183 A1 offenbart einen Schnellwechseladapter für schnellen Austausch beispielsweise einer Spritzpistole eines Beschichtungsroboters. Der Adapter enthält ein automatisch verschiebbares Verriegelungselement, das mit keilförmig abgewinkelten Spannflächen bei montierter Spritzpistole eine Haltekraft auf einen Befestigungsstift der Spritzpistole ausübt, wodurch die Spritzpistole gegen den Adapter gezogen wird. Der Adapter ermöglicht somit eine automatisch lösbare Befestigung der Spritzpistole an dem Roboter.

Eine Aufgabe der Erfindung ist es, eine verbesserte und/oder alternative Möglichkeit zum Wechseln einer Düse zu schaffen, insbesondere eine Möglichkeit, mittels der eine Düse einerseits schnell entfernt und eine andere Düse ebenfalls schnell, zugleich aber richtig ausgerichtet montiert werden kann und zwar vorzugsweise ohne das Erfordernis eines zusätzlichen Schraubwerkzeugs und/oder ohne das Erfordernis des Demontierens eines anderen Teils als der zu wechselnden Düse. Alternativ oder ergänzend ist es eine Aufgabe der Erfindung, ein kompaktes, insbesondere flach konstruiertes Wechselsystem zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine wechselbare Düse, insbesondere eine Schnellwechseldüse, zum Applizieren eines Auftragsmittels (z. B. Dichtmittel, Klebematerial, Konservierungsmittel, insbesondere Wachs, Kunststoff, etc.) auf ein Bauteil (z.B. eine Kraftfahrzeugkarosserie und/oder ein Anbauteil hierfür) und zum Befestigen an einem Wechselsystem.

Die Düse dient insbesondere zur Herstellung von Abdichtungen (z. B. Nahtabdichtungen oder Bördelnahtabdichtungen), Klebeverbindungen, Schutzfilmen, Dämmelementen und/oder Sichtnähten und zwar vorzugsweise an Kraftfahrzeugkarosserien und/oder Anbauteilen hierfür. Die Düse kann alternativ oder ergänzend zur Konservierung, insbesondere Hohlraumkonservierung, von Kraftfahrzeugkarosserien dienen. Das Wechselsystem ist vorzugsweise an einem weiter unten beschriebenen, sogenannten Applikationsblock montiert, der z. B. als sogenannte 3D-Gun ausgeführt sein kann.

Die Düse umfasst einen Düsenkörper mit einer Ausrichteinrichtung zur insbesondere bezogen auf die Längs- und/oder Mittelachse der Düse winkelgerechten, mechanischen Ausrichtung der Düse an dem Wechselsystem. Die Ausrichteinrichtung entspricht einer mechanischen Kodierung, wodurch die Düse nur in richtiger Orientierung ausgerichtet an dem Wechselsystem montierbar ist.

Es ist möglich, dass als Ausrichteinrichtung eine vorzugsweise rotationsunsymmetrische Außengeometrie der Düse dient und die Außengeometrie zumindest einen an der Seite der Düse ausgebildeten Ausrichtabschnitt zur winkelgerechten, mechanischen Ausrichtung der Düse umfasst. Der Ausrichtabschnitt führt insbesondere dazu, dass die Außengeometrie der Düse mittels des Ausrichtabschnitts rotationsunsymmetrisch und/oder zumindest abschnittsweise unrund ist.

Der Ausrichtabschnitt ist vorzugsweise geradlinig und/oder planar, z. B. abgeflacht, an der Außenfläche der Düse ausgeführt, um vorzugsweise eine rotationsunsymmetrische, insbesondere zumindest abschnittsweise unrunde Außengeometrie zu erzeugen. Der Ausrichtabschnitt stellt insbesondere eine sich entlang der Außenfläche des Düsenkörpers erstreckende geradlinige und/oder planare Einrückung dar. Der Ausrichtabschnitt der Düse dient vorzugsweise zur konturparallelen Ausrichtung am Wechselsystem, insbesondere an der Ausrichteinrichtung des Wechselsystems.

Die Außengeometrie der Düse ist vorzugsweise abschnittsweise rund und abschnittsweise planar ausgeformt.

Der Düsenkörper umfasst zweckmäßig eine Halterungseinrichtung zur lösbaren Halterung der Düse an dem Wechselsystem.

Die Halterungseinrichtung umfasst eine oder mehrere Halterungsausnehmungen im Düsenkörper.

Die zumindest eine Halterungsausnehmung ist konisch ausgeführt und verjüngt sich ins Düseninnere, z. B. mittels abgestufter Durchmesser. Dadurch wird ermöglicht, dass eine nicht-axiale, z. B. im Wesentlichen radiale, Beaufschlagung der Halterungsausnehmung eine axiale Verschiebung der Düse bewirkt, z. B., um die Düse axial gegen ein Dichtelement und/oder ein Federelement zu drücken.

Es ist möglich, dass die zumindest eine Halterungsausnehmung als Halterungsnut ausgeführt ist und sich vorzugsweise ringförmig oder zumindest abschnittsweise bogenförmig um die Düse herum erstreckt. Die Halterungsausnehmung sorgt insbesondere dafür, dass die Düse in axialer Richtung zweckmäßig spielfrei fixiert wird, während die Ausrichteinrichtung vorzugsweise dafür sorgt, dass die Düse in Umfangsrichtung zweckmäßig spielfrei fixiert wird.

Es ist möglich, dass die Ausrichteinrichtung zumindest zwei in Umfangsrichtung der Düse voneinander beabstandete Halterungsausnehmungen umfasst, so dass die Halterungsausnehmungen eine Fixierung der Düse nur in winkelgerechter, mechanischer Ausrichtung zulassen. Die Halterungsausnehmungen dienen zusätzlich zur lösbaren Halterung der Düse an dem Wechselsystem. Dadurch kann die Ausrichteinrichtung zugleich als Halterungseinrichtung zur lösbaren Halterung der Düse an dem Wechselsystem fungieren. Bei dieser Ausführungsform dient die Ausrichteinrichtung zugleich als Halterungseinrichtung und/oder umgekehrt. Dadurch, dass die zwei Halterungsausnehmungen in Umfangsrichtung der Düse voneinander beabstandet sind, kann die Düse nur in vorbestimmter und somit winkelgerechter Ausrichtung an dem Wechselsystem montiert werden. In dieser Ausführungsform sorgen folglich die Halterungsausnehmungen vorzugsweise dafür, dass die Düse in axialer Richtung und in Umfangsrichtung zweckmäßig spielfrei fixiert wird.

Der Düsenkörper umfasst vorzugsweise zwei Teilabschnitte, nämlich einen Befestigungssockel und einen Düsenkopf.

Der Befestigungssockel umfasst vorzugsweise die Ausrichteinrichtung und/oder die Halterungseinrichtung.

Der Befestigungssockel ist vorzugsweise als Zentrierzapfen mit zumindest abschnittsweiser kreisrunder Außenkontur zur passgenauen Aufnahme im Wechselsystem ausgeführt.

Es ist möglich, dass zwischen Düsenkopf und Befestigungssockel ein Stufenversatz ausgebildet ist, der z. B. zur Anlage auf dem Wechselsystem genutzt werden kann.

Der Düsenkopf ist vorzugsweise breiter als der Befestigungssockel und weist insbesondere einen größeren Außendurchmesser auf als der Befestigungssockel.

Die Düse kann z. B. eine Schlitzdüse (z. B. Flatstream-Düse) sein und kann somit zweckmäßig eine schlitzförmige Düsenaustrittsöffnung aufweisen. Allerdings sind auch andere Düsen und Düsenaustrittsöffnungen möglich (z. B. Hemflange, Airless, Extrusion, Rundstrahl, etc.).

Die Düse dient insbesondere zur Herstellung von Abdichtungen (z. B. Nahtabdichtungen), Klebeverbindungen, Dämmelementen und/oder Schutzfilmen auf Kraftfahrzeugkarosserien und/oder deren Anbauteile. Alternativ oder ergänzend kann die Düse zur Konservierung, insbesondere Hohlraumkonservierung von Kraftfahrzeugkarosserien dienen.

Die Erfindung schafft außerdem ein Wechselsystem, insbesondere ein Düsen-Schnellwechselsystem, für eine wechselbare Düse, vorzugsweise eine wechselbare Düse wie hierin offenbart. Das Wechselsystem kann als Dreh- oder Schiebewechselsystem ausgeführt sein. Das Wechselsystem dient zweckmäßig zur Montage an einen Applikationsblock (z. B. einer 3D-Gun), der üblicherweise an einer um ihre Längsachse drehbaren Lanze befestigt wird.

Das Wechselsystem ist vorzugsweise ein Schnellwechselsystem, das ein Wechseln der Düse ohne das Erfordernis eines Schraubwerkzeugs und/oder ohne das Erfordernis des Entfernens eines anderen Teils als der Düse erfordert. Insbesondere kann mittels einer einfachen Dreh- oder Schiebebewegung des Wechselsystems die Düse durch das Wechselsystem fixiert werden oder zur Entnahme gelöst werden. Die dazu erforderliche Drehbewegung kann z. B. kleiner 45° sein, die erforderliche Schiebebewegung z. B. kleiner 2 cm.

Es versteht sich, dass die wie hierin offenbarte Düse und das wie hierin offenbarte Wechselsystem zweckmäßig komplementär ausgeführt sind, so dass die Düse an dem Wechselsystem montiert werden kann. Somit gilt die Beschreibung zur Düse zweckmäßig entsprechend für das Wechselsystem und umgekehrt.

Das Wechselsystem umfasst eine Ausrichteinrichtung zur insbesondere bezogen auf die Längs- und/oder Mittelachse der Düse winkelgerechten, mechanischen Ausrichtung der Düse.

Die Ausrichteinrichtung des Wechselsystems umfasst zweckmäßig zumindest einen planaren und/oder geradlinigen Ausrichtabschnitt zur vorzugsweise konturparallelen Ausrichtung der Düse. Der Ausrichtabschnitt ist vorzugsweise an einer Einlassöffnung des Wechselsystems angeordnet, vorzugsweise so, dass die Einlassöffnung mit einer planaren und/oder geradlinigen, insbesondere rotationsunsymmetrischen und/oder zumindest abschnittsweise unrunden, Innenkontur versehen wird, wodurch z. B. gewährleistet werden kann, dass nur eine richtig ausgerichtete Düse die Einlassöffnung passieren kann.

Die Ausrichteinrichtung kann zumindest zwei in Umfangsrichtung und/oder seitlich voneinander beabstandete, vorzugsweise nicht-axial, z. B. im Wesentlichen radial und/oder seitlich, verschiebbare Befestigungselemente zur Halterung der Düse umfassen, so dass die Befestigungselemente eine Fixierung der Düse nur in winkelgerechter Ausrichtung zulassen. Die Befestigungselemente dienen zudem zur lösbaren Halterung der Düse. Dadurch dient die Ausrichteinrichtung zugleich als Halterungseinrichtung zur lösbaren Halterung der Düse. Bei dieser Ausführungsform dient die Ausrichteinrichtung zugleich als Halterungseinrichtung und/oder umgekehrt. Die Befestigungselemente können folglich genutzt werden, um zusätzlich zur Halterungsfunktion die Funktion der winkelgerechten, mechanischen Ausrichtung der Düse zu übernehmen, weil die Halterungsausnehmungen der Düse nur in vorbestimmter und somit winkelgerechter Ausrichtung mit den Befestigungselementen in Eingriff gelangen. In dieser Ausführungsform sorgen folglich die Befestigungselemente vorzugsweise dafür, dass die Düse in axialer Richtung und in Umfangsrichtung zweckmäßig spielfrei fixiert werden kann.

Das Wechselsystem umfasst vorzugsweise eine Aufnahme mit zylindrischer, insbesondere kreiszylindrischer Innenkontur zum zweckmäßig passgenauen und/oder zentrierten, insbesondere spielfreien, Aufnehmen des Befestigungssockels der Düse. Die Aufnahme kann zweckmäßig z. B. eine runde oder quadrat- oder rechteckförmige Außenkontur aufweisen.

Das Wechselsystem umfasst zumindest ein vorzugsweise einwärts und auswärts verschiebbares Befestigungselement zur Halterung der Düse, vorzugsweise zumindest ein relativ zur Aufnahme nicht-axial, insbesondere im Wesentlichen radial, verschiebbares Befestigungselement. Das zumindest eine Befestigungselement dient insbesondere dazu, zur Halterung der Düse seitlich außen auf die Düse zu drücken. Das Befestigungselement ist vorzugsweise in einer Öffnung der Wandung der Aufnahme verschiebbar eingesetzt.

Es ist möglich, dass die Wandung der Aufnahme zumindest eine Öffnung aufweist, in die ein verschiebbares Befestigungselement eingesetzt ist. Vorzugsweise umfasst die Wandung allerdings mehrere in Umfangsrichtung der Aufnahme voneinander beabstandete Öffnungen, in die jeweils ein verschiebbares Befestigungselement eingesetzt ist.

Das Wechselsystem umfasst ein bewegbares, vorzugsweise drehbares oder insbesondere translatorisch oder geradlinig verschiebbares, Betätigungsmittel, das eine profilierte Innenspannkontur zum Drücken und/oder Freigeben des zumindest einen Befestigungselements umfasst, um die Düse in einen fixierten Zustand oder einen gelösten Zustand zu bringen.

Die Innenspannkontur ist vorzugsweise so profiliert ausgeformt, dass das Betätigungsmittel selbsthemmend in der Fixierstellung zum Fixieren der Düse gehalten wird.

Das zumindest eine Befestigungselement ist vorzugsweise mittels des Betätigungsmittels einwärts bewegbar, um seitlich in gegen die Düse gedrückt zu werden. Wie schon zuvor erwähnt, erfolgt die Bewegung des zumindest einen Befestigungselements vorzugsweise im Wesentlichen radial und/oder nicht-axial zur Aufnahme des Wechselsystems.

Das Betätigungsmittel kann insbesondere ein Drehriegel sein, so dass das Wechselsystem ein Dreh-Wechselsystem darstellt.

Der Drehriegel weist insbesondere einen Spannring auf, der innenseitig die Innenspannkontur umfasst.

Der Spannring umgibt zweckmäßig die Wandung der Aufnahme und somit folglich das zumindest eine Befestigungselement. Dadurch, dass die Wandung in den Spannring vorzugsweise passgenau eingesetzt ist, ist das Wechselsystem relativ kompakt, insbesondere relativ flach. Das Betätigungsmittel und die Aufnahme bauen nicht aufeinander auf, sondern sind ineinandergefügt.

Der Drehriegel umfasst zweckmäßig zumindest einen Dreharm, der von dem Spannring radial absteht und der z. B. mit einem Drehflansch versehen sein kann.

Es ist möglich, dass eine Drehbewegung des Drehriegels von kleiner 180°, kleiner 90°, kleiner 60°, kleiner 45° oder sogar kleiner 30° ausreicht, um die Düse in einen fixierten Zustand oder einen gelösten Zustand zu bringen.

Das Wechselsystem kann ein Gehäuseelement aufweisen. Das Gehäuseelement weist vorzugsweise eine die Ausrichteinrichtung aufweisende Eingangsöffnung auf, über die die Düse dem Wechselsystem zur Fixierung zugeführt werden kann, allerdings nur, sofern sie winkelgerecht ausgerichtet ist.

Das Gehäuseelement dient zweckmäßig als Gehäuse für den Spannring und/oder die Aufnahme.

Es ist möglich, dass die Außenkontur des Gehäuseelements an zumindest einer Seite gekrümmt parallel zum Drehweg des Drehflansches ausgeformt ist.

Es ist möglich, dass das Betätigungsmittel ein Schieber ist und/oder das Wechselsystem ein Schiebewechselsystem darstellt.

Der Schieber umfasst zweckmäßig innenseitig die Innenspannkontur.

Es ist möglich, dass der Schieber die Wandung der Aufnahme vorzugsweise passgenau umgibt, zweckmäßig an zwei oder drei Seiten. Dadurch, dass die Wandung in den Schieber vorzugsweise passgenau eingesetzt ist, ist das Wechselsystem relativ kompakt, insbesondere relativ flach. Das Betätigungsmittel und die Aufnahme bauen nicht aufeinander auf, sondern sind ineinandergefügt.

Die Außenkontur der Wandung ist in der Ausführungsform "Schieber" vorzugsweise quadrat- oder rechteckförmig und in der Ausführungsform "Drehriegel" vorzugsweise ringförmig. In beiden Ausführungsformen ist die Innenkontur zweckmäßig zylindrisch, vorzugsweise kreiszylindrisch.

Der Schieber ist zweckmäßig im Wesentlichen U-förmig ausgebildet und umfasst insbesondere zwei miteinander verbundene Armabschnitte, deren Innenseiten die Innenspannkontur aufweisen. Allerdings muss der Schieber keine offene Querschnittsform aufweisen, sondern kann auch eine geschlossene Querschnittsform aufweisen, z. B. geschlossene Armabschnitte.

Die Armabschnitte können ferner mit jeweils einem Langloch zur Führung und/oder Halterung des Schiebers versehen sein.

Es ist möglich, dass die Ausrichteinrichtung an dem Schieber ausgebildet ist. Die Ausrichteinrichtung begrenzt vorzugsweise eine Eingangsöffnung für die Düse, über die die Düse dem Wechselsystem zur Fixierung zugeführt werden kann, allerdings nur, sofern sie winkelgerecht ausgerichtet ist.

Das Wechselsystem umfasst ferner vorzugsweise ein elastisches Dichtelement, gegen das die Düse im fixierten Zustand zweckmäßig mittels zumindest eines nicht-axial verschobenen Befestigungselements axial beaufschlagbar ist. Das Dichtelement kann z. B. ein Dichtring sein.

Das Wechselsystem kann außerdem zumindest ein Federelement oder ein anderes elastisches Element aufweisen, gegen das die Düse im fixierten Zustand zweckmäßig mittels zumindest eines nicht-axial verschobenen Befestigungselements axial beaufschlagbar ist und das die Düse nach axial außen beaufschlagt, um das Entfernen der Düse zu unterstützen.

Es ist möglich, dass das Wechselsystem eine Düsenwechselstation mit mehreren Düsen wie hierin beschrieben aufweist. Die Düsenwechselstation umfasst vorzugsweise eine Düsenentfernungssektion, an der eine Düse von dem Wechselsystem automatisch entfernbar ist, und eine Düsenabgabesektion, an der eine Düse automatisch an das Wechselsystem montierbar ist. Die Düsenentfernungssektion und die Düsenabgabesektion können zwei voneinander separate Sektionen sein oder ein und dieselbe Sektion darstellen.

Die Düsenwechselstation in Kombination mit der wie hierin beschriebenen Wechselsystem/Düse-Kombination ermöglicht vorzugsweise einen komplett mannlosen, maschinellen und/oder automatischen Düsen-Wechselvorgang.

Das zumindest eine Befestigungselement ist vorzugsweise eine Kugel, die zweckmäßig mittels des Betatätigungsmittels, insbesondere der Innenspannkontur beaufschlagbar ist. Das zumindest eine Befestigungselement kann ferner ein zumindest abschnittsweise sphärisches oder zylindrisches Befestigungselement sein.

Es ist möglich, dass das Wechselsystem zumindest ein Befestigungselement umfasst, das federbeaufschlagt ist und nicht von dem Betätigungsmittel, insbesondere der Innenspannkontur beaufschlagbar ist.

Die Düse und das Wechselsystem sind zweckmäßig so ausgeführt, dass der Düsenkopf nach Montage an das Wechselsystem von dem Wechselsystem absteht und somit frei zugänglich ist, was den Wechselvorgang erleichtert.

Zu erwähnen ist, dass das Wechselsystem eine Höhe von vorzugsweise kleiner 3cm oder sogar kleiner 2cm aufweisen kann, was insbesondere durch das zumindest abschnittsweise Einfügen der Aufnahme in den Drehriegel (Drehring) oder in den Schieber erzielt werden kann und alternativ oder ergänzend durch die Verwendung flacher Komponenten.

Zu erwähnen ist außerdem, dass die Aufnahme mit zylindrischer Innenkontur zum passgenauen Aufnehmen des Düsen-Befestigungssockels dient.

Zu erwähnen ist ferner, dass das Wechselsystem manuell und automatisch, z. B. maschinell, betätigt werden kann.

Die Erfindung ist nicht auf ein Wechselsystem und eine Düse beschränkt, sondern umfasst darüber hinaus ein Applikationssystem mit einem Applikationsblock (z. B. einer sogenannten 3D-Gun), vorzugsweise zumindest zwei Wechselsystemen wie hierin offenbart, vorzugsweise zumindest zwei Düsen wie hierin offenbart und einem Manipulator (z. B. Roboter), der eine um ihre Längsachse drehbare Lanze zum Führen des Applikationsblocks trägt. Das Applikationssystem dient vorzugsweise zur Herstellung von Abdichtungen (z. B. Nahtabdichtungen, Bördelnahtabdichtungen, etc.), Schutzfilmaufträgen, Dämmelementen und/oder Sichtnähten an Kraftfahrzeugkarosserien und/oder deren Anbauteilen. Es kann alternativ oder ergänzend zur Hohlraumkonservierung von Kraftfahrzeugkarosserien dienen.

Der Manipulator ist vorzugsweise ein Roboter (z. B. Mehrachsroboter), kann allerdings auch z. B. handgeführt sein.

Zu erwähnen ist nochmals, dass der Ausrichtabschnitt der Düse und die Ausrichteinrichtung des Wechselsystems insbesondere zur winkelgerechten, mechanischen Ausrichtung der Düse dienen und zwar zweckmäßig bezogen auf die Längs- und/oder Mittelachse der Düse.

Um in beengten Platzverhältnissen auszuführende Applikationstätigkeiten (z. B. Nahtabdichtungen, Hohlraumkonservierung, etc.) ausführen zu können, muss der Applikationsblock möglichst kompakt sein. Nur deshalb, weil das Wechselsystem wie hierin offenbart, äußerst flach konstruiert ist, ist es möglich, mehr als nur ein Wechselsystem an dem Applikationsblock zu montieren. Allerdings sei erwähnt, dass die Erfindung auch Ausführungsformen mit nur einem Wechselsystem umfasst.

Das Applikationssystem kann darüber hinaus eine DüsenWechselstation mit mehreren Düsen, wie hierin offenbart, umfassen. Der Manipulator (z. B. Roboter) ist zweckmäßig so konfiguriert, den Applikationsblock und somit die Wechselsysteme zum automatischen Wechseln der Düsen zu der Düsenwechselstation zu führen, so dass an oder in der Düsenwechselstation der Düsenwechsel automatisch und somit zweckmäßig mannlos erfolgen kann. Zum automatischen Wechseln der Düsen können z. B. Bewegungen des Manipulators und/oder bewegbare Betätigungskomponenten der Düsenwechselstation genutzt werden.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Düse gemäß einer Ausführungsform der Erfindung,
- Figur 2: zeigt eine explosionsartige, perspektivische Ansicht der Düse der Figur 1 und eines zugehörigen Wechselsystems gemäß einer Ausführungsform der Erfindung,
- Figur 3: zeigt die Düse und das Wechselsystem der Figur 2 in montiertem Zustand,
- Figur 4: zeigt eine Schnittansicht gemäß Linie A-A der Figur 3,
- Figur 5: zeigt eine Schnittansicht des Wechselsystems der Figuren 2 bis 4 in geöffnetem Zustand,
- Figur 6: zeigt eine Schnittansicht des Wechselsystems der Figuren 2 bis 5 in fixiertem Zustand,
- Figur 7: zeigt eine explosionsartige, perspektivische Ansicht einer Düse gemäß einer Ausführungsform der Erfindung und eines zugehöriges Wechselsystems gemäß einer Ausführungsform der Erfindung,
- Figur 8: zeigt eine perspektivische Ansicht des Wechselsystems und der Düse der Figur 7 in montiertem Zustand,
- Figur 9: zeigt eine Schnittansicht der Düse und des Wechselsystems gemäß Linie A-A der Figur 8,
- Figur 10: zeigt eine Schnittansicht gemäß Linie B-B der Figur 8,
- Figur 11: zeigt eine perspektivische, explosionsartige Ansicht einer Düse gemäß einer Ausführungsform der Erfindung und eines zugehörigen Wechselsystems gemäß einer Ausführungsform der Erfindung,
- Figur 12: zeigt eine perspektivische Ansicht der Düse und des Wechselsystems der Figur 11 in montiertem Zustand,
- Figur 13: zeigt eine Schnittansicht gemäß Linie A-A der Figur 12,
- Figur 14: zeigt eine schematische Ansicht eines Applikationssystems gemäß einer Ausführungsform der Erfindung,
- Figur 15: zeigt eine um ihre Längsachse drehbare Lanze in detaillierterer Darstellung
- Figur 16: zeigt einen Druckreduzierer gemäß einer Ausführungsform der Erfindung und
- Figur 17: zeigt eine Schnittansicht einer Düse mit Mischer im Applikationskopf gemäß einer Ausführungsform der Erfindung.

Die in den Figuren gezeigten Ausführungsformen stimmen teilweise überein, wobei ähnliche oder identische Teile mit den gleichen Bezugszeichen, ggf. mit Apostroph, versehen sind und zu deren Erläuterung auch auf die Beschreibung der anderen Ausführungsformen verwiesen wird, um Wiederholungen zu vermeiden.

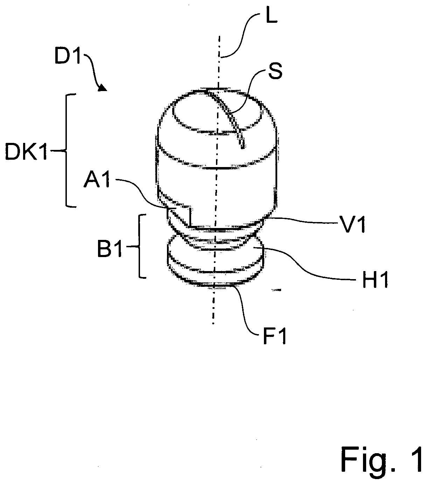

Figur 1 zeigt eine perspektivische Ansicht einer Düse D1 gemäß einer Ausführungsform der Erfindung.

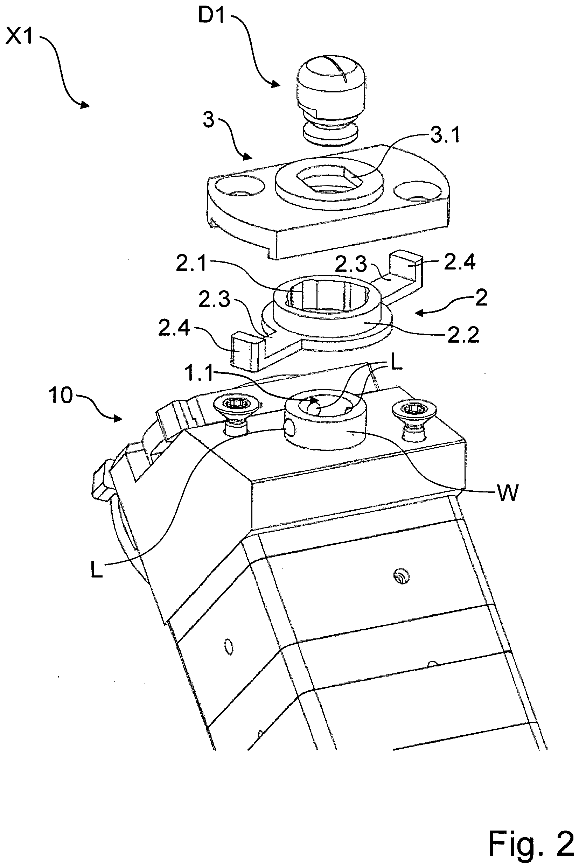

Die Düse D1 ist eine wechselbare Düse zum Applizieren eines Auftragsmittels auf ein Bauteil, z. B. eine Kraftfahrzeugkarosserie, und zum Befestigen an einem Wechselsystem X1 (Figuren 2 bis 6 und 11 bis 13). Die Düse D1 ist insbesondere eine Schlitzdüse mit schlitzförmiger Düsenaustrittsöffnung S zum Erzeugen einer Nahtabdichtung auf einer Kraftfahrzeugkarosserie. Die Düse 1 kann allerdings auch andere Düsenaustrittsöffnungen aufweisen und ist somit nicht auf Schlitzdüsen beschränkt.

Die wechselbare Düse D1 ist als Schnellwechseldüse konstruiert und kann ohne zusätzliches Werkzeug an dem Wechselsystem X1 montiert und davon entfernt werden. Darüber hinaus kann die Düse 1 ohne das Erfordernis des Entfernens anderer Teile als die Düse D1 selbst von dem Wechselsystem X1 entfernt werden.

Der Düsenkörper der Düse D1 umfasst eine Ausrichteinrichtung A1 zur winkelgerechten, mechanischen Ausrichtung der Düse 1 an dem Wechselsystem X1 und eine Halterungseinrichtung H1 zur lösbaren Halterung der Düse D1 an dem Wechselsystem X1.

Die winkelgerechte Ausrichtung der Düse D1 bezieht sich auf die Längs-/Mittelachse L der Düse D1.

Als Ausrichteinrichtung A1 dient eine zweckmäßig rotationsunsymmetrische, unrunde Außengeometrie der Düse D1. Die Außengeometrie umfasst seitlich zumindest einen geradlinig oder planar ausgebildeten Ausrichtabschnitt A1 zur winkelgerechten, mechanischen Ausrichtung der Düse D1. Der Ausrichtabschnitt A1 dient zur konturparallelen Ausrichtung am Wechselsystem X1 und zur rotationsunsymmetrischen Ausbildung der Außengeometrie der Düse D1.

Die Halterungseinrichtung H1 umfasst eine Halterungsausnehmung, die als Halterungsnut ausgeführt ist und sich zweckmäßig ringförmig um die Düse D1 herum erstreckt. Die Halterungsausnehmung ist konisch ausgeformt und verjüngt sich ins Düseninnere, so dass eine nicht-axiale, insbesondere im Wesentlichen radiale Beaufschlagung der Halterungsausnehmung H1 zu einer axialen Beaufschlagung der Düse D1 führt, wodurch z. B. eine Stirnfläche F1 der Düse D1 gegen ein vorzugsweise elastisches Dichtelement und/oder ein Federelement zur Unterstützung der Entnahme der Düse D1 gedrückt werden kann.

Der Düsenkörper ist in einen Düsenkopf DK1 und einen Befestigungssockel B1 aufgeteilt.

Der Düsenkopf DK1 umfasst die schlitzförmige Düsenaustrittsöffnung S und die Ausrichteinrichtung A1. Der Befestigungssockel B1 umfasst die Halterungseinrichtung H1. Der Befestigungssockel B1 ist als Zentrierzapfen mit zumindest abschnittsweiser kreisrunder Außenkontur ausgebildet und dient zum Einsetzen in eine Aufnahme des Wechselsystems X1.

Der Düsenkopf DK1 ist breiter und weist einen größeren Außendurchmesser auf als der Befestigungssockel B1, so dass zwischen dem Düsenkopf DK1 und dem Befestigungssockel B1 ein Stufenversatz V1 ausgebildet ist, der zur Anlage auf dem Wechselsystem X1 genutzt werden kann.

Figur 2 zeigt eine perspektivische, explosionsartige Ansicht eines Wechselsystems X1 gemäß einer Ausführungsform der Erfindung, insbesondere für eine Düse D1 gemäß Figur 1.

Das Wechselsystem X1 ist als Schnellwechseldrehsystem ausgeführt und ermöglicht somit, dass die Düse D1 ohne das Erfordernis eines Schraubendrehers oder eines anderen Löswerkzeugs und ohne das Erfordernis des Entfernens eines anderen Teils als der Düse D1 wechselbar ist. Eine Drehbewegung von z. B. kleiner 45° reicht aus, um die Düse 1 zu fixieren oder zu lösen. Trotz des schnellen und einfachen Wechselvorgangs stellen das Wechselsystem X1 und die Düse D1 mechanisch sicher, dass die Düse D1 nur in winkelgerechter Ausrichtung fixierbar ist.

Das Wechselsystem X1 umfasst eine Aufnahme 1.1 zur passgenauen, spielfreien Aufnahme des Befestigungssockel B1 der Düse D1, einen Drehriegel 2 und ein Gehäuseelement 3.

An dem Gehäuseelement 3 ist eine Ausrichteinrichtung 3.1 zur winkelgerechten, mechanischen Ausrichtung der Düse D1 ausgebildet. Die Ausrichteinrichtung A1 der Düse D1 und die Ausrichteinrichtung 3.1 des Wechselsystems X1 sind komplementär ausgeführt.

Als Ausrichteinrichtung 3.1 des Wechselsystems X1 dient eine rotationsunsymmetrische, abschnittsweise unrunde Innengeometrie mit geradlinig oder planar ausgeführtem Ausrichtabschnitt 3.1 zur winkelgerechten, mechanischen Ausrichtung der Düse D1. Die Innengeometrie ist so ausgeformt, dass die Düse D1 nur in winkelgerechter Ausrichtung dem Wechselsystem X1 zur Fixierung zuführbar ist, während die Düse D1 in falscher Ausrichtung blockiert wird.

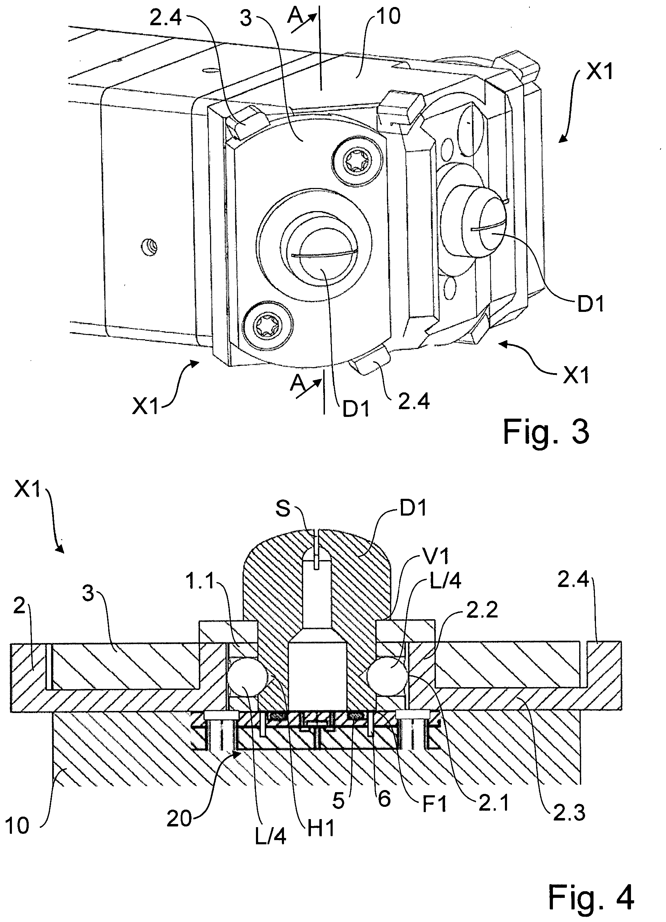

Das Wechselsystem X1 umfasst ferner zweckmäßig drei Befestigungselemente 4 (Figuren 4 bis 6) zur Halterung der Düse D1. Die Befestigungselemente 4 dienen zum Eingriff mit der Halterungseinrichtung H1 der Düse D1 und sind in Umfangsrichtung der Aufnahme 1.1 voneinander beabstandet.

Die Befestigungselemente 4 sind als Kugeln ausgeführt und in drei Öffnungen L in der Wandung W der Aufnahme 1.1 einwärts und auswärts, insbesondere im Wesentlichen radial verschiebbar eingesetzt.

Die Befestigungselemente 4 dienen zur Fixierung der Düse D1 in Axialrichtung, während die Ausrichteinrichtung 3.1 zur Fixierung der Düse D1 in Umfangsrichtung dient.

Der Drehriegel 2 umfasst einen Spannring 2.2, der eine profilierte Innenspannkontur 2.1 zum Einwärts- und Auswärtsbewegen der Kugeln 4 aufweist und der die Wandung W der Aufnahme 1.1 umgibt. Der Drehriegel 2 umfasst zwei Dreharme 2.3, die von dem Spannring 2.2 radial abstehen und die mit jeweils einem Drehflansch 2.4 versehen sind.

Das Wechselsystem X1 ist so konzipiert, dass eine Drehbewegung des Drehriegels 2 von zweckmäßig kleiner 45° ausreicht, um die Düse D1 in einen fixierten Zustand oder einen gelösten Zustand zu bringen.

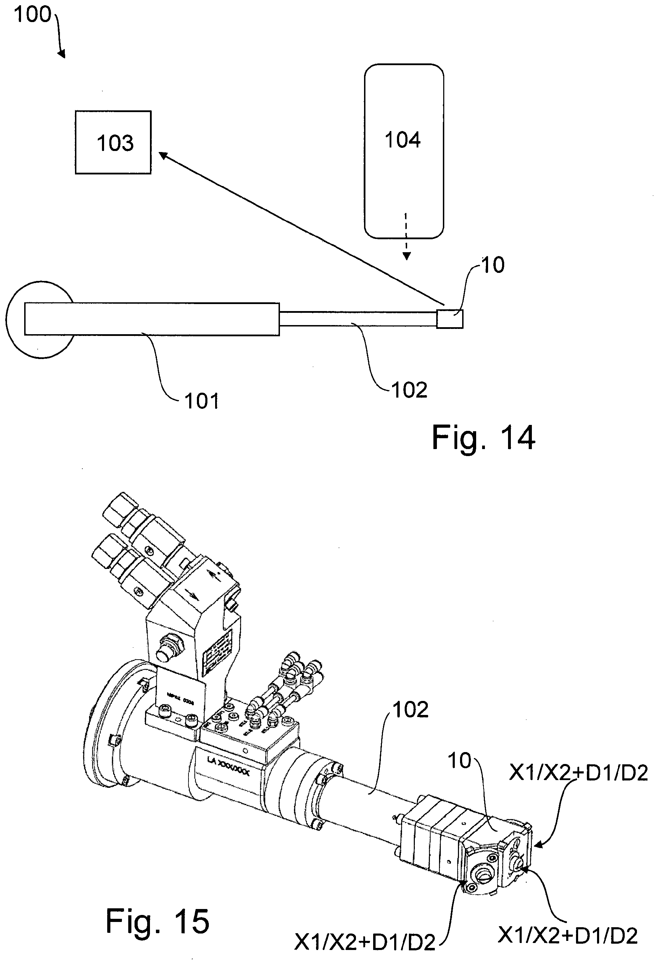

Figur 2 zeigt außerdem einen Applikationsblock (Applikationskopf) 10, der an einer um ihre Längsachse drehbaren Lanze (Figur 15) montiert ist und der eine sogenannte 3D-Gun darstellt. Die Aufnahme 1.1 und das Gehäuseelement 3 sind fest an dem Applikationskopf 10 montiert.

Figur 3 zeigt die Düse D1 und das Wechselsystem X1 der Figur 2 in montiertem Zustand.

An dem Applikationskopf 10 sind drei Wechselsysteme X1 mit drei Düsen D1 montiert. Die Düsen D1 sind in unterschiedliche Applikationsrichtungen orientiert, nämlich 0°, 45° und 90°.

Figur 4 zeigt eine Schnittansicht gemäß Linie A-A der Figur 3.

Figur 4 zeigt die Düse D1 in fixiertem Zustand. Die Kugeln 4 in den Öffnungen L werden durch die Innenspannkontur 2.1 des Drehriegels 2 nach innen gegen die konischen, sich ins Düseninnere verjüngenden Halterungsausnehmungen H1 der Düse D1 gedrückt, wodurch die Düse D1 einerseits formschlüssig fixiert wird und andererseits in Figur 4 nach axial unten gegen ein elastisches Dichtelement 5 und mehrere Federelemente 6 gedrückt wird. Wenn die Fixierung der Düse D1 gelöst wird, drücken das Dichtelement 5 und die Federelemente 6 die Düse D1 zumindest geringfügig nach außen, was den Entfernungsvorgang der Düse D1 erleichtert.

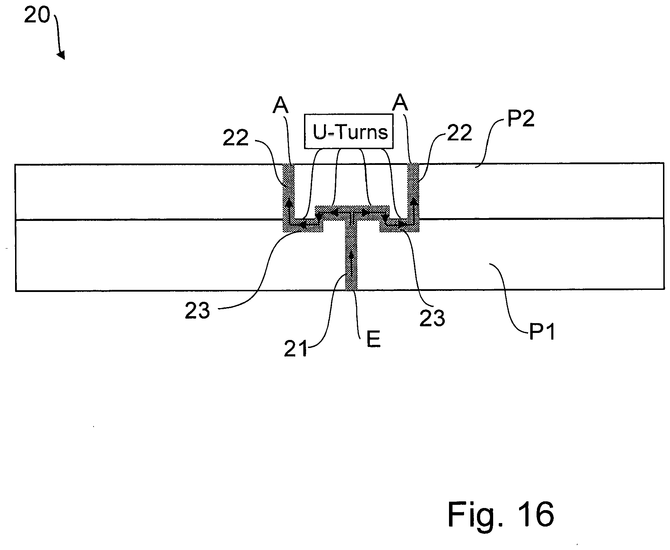

Figur 4 zeigt außerdem einen Druckreduzierer 20, der strömungstechnisch direkt vor der Düse D1 angeordnet und in den Applikationskopf 10 integriert ist, so dass er zweckmäßig bündig mit der Außenfläche des Applikationskopfs 10 abschließt. Der Druckreduzierer 20 wird unter Bezugnahme auf die Figur 16 näher beschrieben.

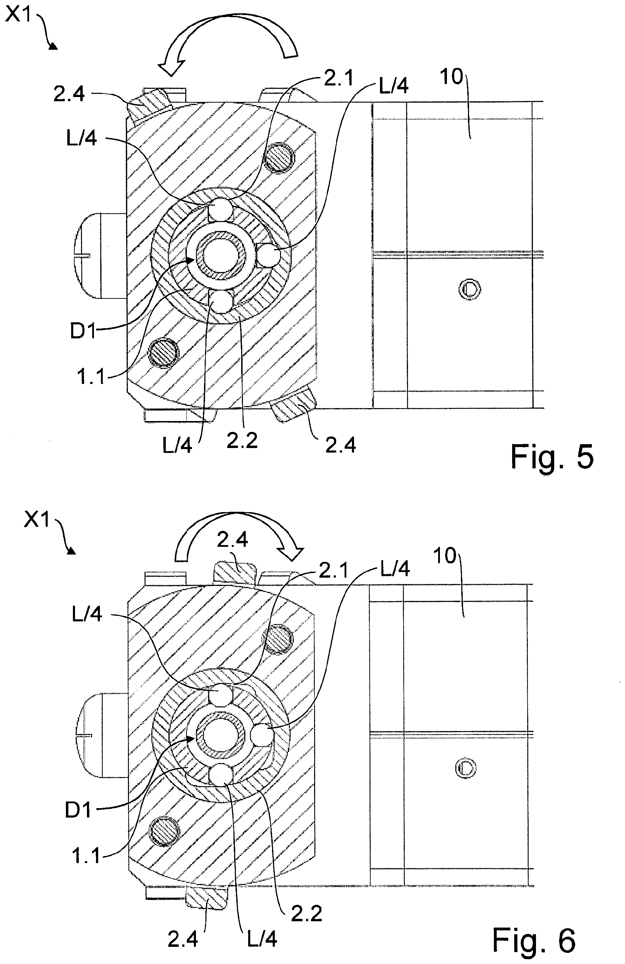

Figur 5 zeigt eine Schnittansicht des Wechselsystems X1 der Figuren 2 bis 4 in geöffnetem Zustand, so dass die Düse D1 entfernt werden kann.

Figur 5 zeigt, dass die profilierte Innenspannkontur 2.1 des Drehriegels 2 einen Freiraum für die Kugeln 4 aufweist, in den die Kugeln 4 verschiebbar sind, um die Düse D1 entfernen zu können. Die Kugeln 4 werden durch das Herausziehen der Düse D1 in den Freiraum der Innenspannkontur 2.1 geschoben.

Figur 6 zeigt eine Schnittansicht des Wechselsystems X1 der Figuren 2 bis 5 in verriegeltem Zustand, so dass die Düse D1 fixiert ist.

Figur 6 zeigt, dass die profilierte Innenspannkontur 2.1 des Drehriegels 2 die Kugeln 4 gegen die Düse D1 drückt und die Düse D1 dadurch fixiert wird. Im fixierten Zustand sind die Kugeln 4 nach einwärts verschoben. Die Innenspannkontur 2.1 ist so ausgeformt, dass der Drehriegel 2 und somit die Kugeln 4 selbsthemmend in der Fixierstellung zur Fixierung der Düse D1 verbleiben.

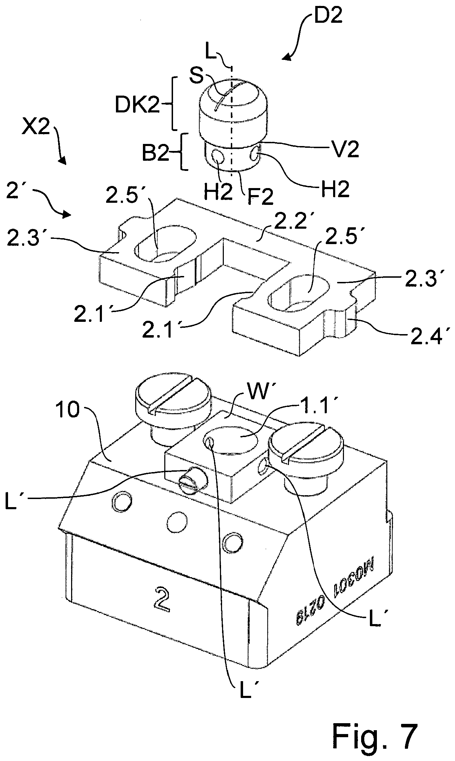

Figur 7 zeigt eine perspektivische Ansicht einer wechselbaren Düse D2 gemäß einer anderen Ausführungsform der Erfindung und ein Wechselsystem X2 gemäß einer anderen Ausführungsform der Erfindung.

Die Düse D2 umfasst einen Düsenkörper mit einer Ausrichteinrichtung H2 zur winkelgerechten, mechanischen Ausrichtung der Düse D2 an dem Wechselsystem X2. Die Ausrichteinrichtung H2 umfasst drei in Umfangsrichtung der Düse D2 voneinander beabstandete Halterungsausnehmungen H2, wovon zwei in Figur 7 zu sehen sind. Die Halterungsausnehmungen H2 lassen eine Fixierung nur in winkelgerechter Ausrichtung der Düse D2 zu und dienen zugleich zur lösbaren Halterung der Düse D2 an dem Wechselsystem X2. Die Ausrichteinrichtung H2 dient somit zugleich als Halterungseinrichtung H2 zur lösbaren Halterung der Düse D2 an dem Wechselsystems X2. Daraus folgt, dass im Rahmen der Erfindung die Halterungseinrichtung und die Ausrichteinrichtung der Düse zwei voneinander separierte Einrichtungen oder ein und dieselbe Einrichtung sein können.

Die drei Halterungsausnehmungen H2 sind konisch ausgeführt und verjüngen sich ins Düseninnere, so dass eine nicht-axiale, insbesondere im Wesentlichen radiale Beaufschlagung eine axiale Verschiebung der Düse D2 bewirkt.

Die Düse D2 umfasst einen Düsenkopf DK2 und einen Befestigungssockel B2. Der Düsenkopf DK2 ist breiter als der Befestigungssockel B2 und weist insbesondere einen größeren Außendurchmesser auf als der Befestigungssockel B2. Zwischen Düsenkopf DK2 und Befestigungssockel B2 hat der Düsenkörper einen Stufenversatz V2, der zur Anlage auf dem Wechselsystem X2 dienen kann.

Die Halterungsausnehmungen H2 sind am Befestigungssockel B2 der Düse D2 ausgebildet, während die schlitzförmige Düsenaustrittsöffnung S am Düsenkopf DK2 angeordnet ist.

Eine Stirnfläche F2 des Befestigungssockels B2 umfasst wie die Stirnfläche F1 der Düse D1 eine Düseneintrittsöffnung und dient zur dichten Anlage an dem Applikationskopf 10.

Figur 7 zeigt des Weiteren ein der Düse D2 zugehöriges Wechselsystem X2. Das Wechselsystem X2 wird nachfolgend unter Bezugnahme auf die Figuren 7 bis 10 beschrieben.

Das Wechselsystem X2 ist als Schnellwechselschiebesystem ausgeführt und ermöglicht somit, dass die Düse D2 ohne das Erfordernis eines Schraubendrehers oder eines anderen Löswerkzeugs und ohne das Erfordernis des Entfernens eines anderen Teils als der Düse D2 wechselbar ist. Eine Schiebebewegung von z. B. kleiner 3cm reicht aus, um die Düse D2 zu fixieren oder zu lösen. Trotz des schnellen und einfachen Wechselvorgangs stellt das Wechselsystem X2 sicher, dass die Düse D2 nur in winkelgerechter Ausrichtung fixierbar ist.

Das Wechselsystem X2 umfasst einen Schieber 2' und eine Aufnahme 1.1' mit zylindrischer Innenkontur zum passgenauen, spielfreien Aufnehmen des Befestigungssockels B2 der Düse D2.

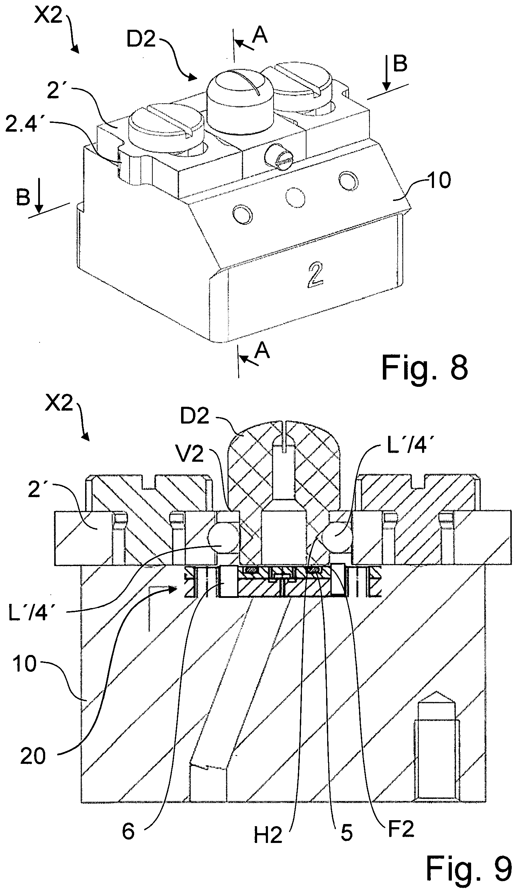

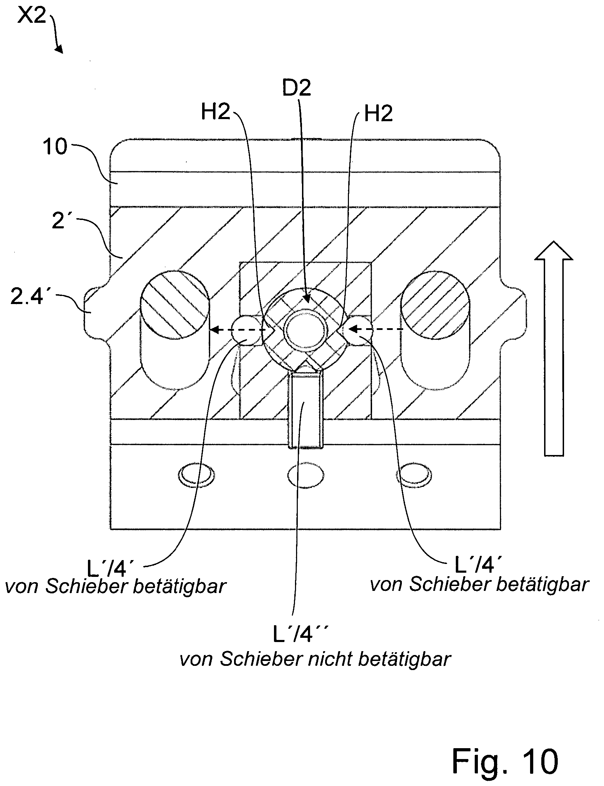

Das Wechselsystem X2 umfasst eine Ausrichteinrichtung 4', 4" mit drei Befestigungselementen 4', 4" (Figuren 9 und 10), die einerseits zur winkelgerechten, mechanischen Ausrichtung der Düse D2 und andererseits zur lösbaren Halterung der Düse D2 dienen. Die Befestigungselemente 4', 4"des Wechselsystems X2 und die Halterungsausnehmungen H2 der Düse 2 sind komplementär ausgeführt.

Die Befestigungselemente 4', 4" sind in Umfangsrichtung der Aufnahme 1.1' voneinander beabstandet, so dass sie eine Fixierung der Düse D2 nur in winkelgerechter Ausrichtung der Düse D2 zulassen. Die Befestigungselemente 4', 4" dienen zur lösbaren Halterung der Düse D2 (Fixierung in Axialrichtung und Umfangsrichtung) und zugleich als Ausrichteinrichtung 4', 4" für die Düse D2.Daraus folgt, dass im Rahmen der Erfindung die Befestigungselemente und die Ausrichteinrichtung des Wechselsystems voneinander separierte Einrichtungen oder ein und dieselbe Einrichtung sein können.

Die drei Befestigungselemente 4', 4" sind einwärts und auswärts, vorzugsweise im Wesentlichen radial, verschiebbar in drei Öffnungen L' der Wandung W' der Aufnahme 1'1 eingesetzt.

Der Schieber 2' umfasst zwei über einen Stegabschnitt 2.2' miteinander verbundene Armabschnitte 2.3' und stellt somit ein im Wesentlichen U-förmiges, zweckmäßig plattenförmiges Teil dar, kann allerdings auch mit geschlossener Querschnittsform ausgeführt werden.

Die Innenseiten der Armabschnitte 2.3' sind mit einer profilierten Innenspannkontur 2.1' zum Einwärts- und Auswärtsbewegen zweier Befestigungselemente 4' versehen, um die Düse D2 in einen fixierten Zustand oder einen gelösten Zustand zu bringen. Das dritte Befestigungselement 4" ist nicht von der Innenspannkontur 2.1' betätigbar, sondern kann z. B. mittels einer Feder vorgespannt sein, um die Düse D2 lösbar zu fixieren.

Die Armabschnitte 2.3' sind ferner mit Langlöchern 2.5' zur Befestigung und Führung des Schiebers 2' und Schiebeflanschen 2.4' zum Verschieben des Schiebers 2' versehen.

Die Wandung W' oder allgemein die Aufnahme 1.1' umfasst eine quadrat- oder rechteckförmige Außenkontur, die passgenau, formschlüssig zwischen den Armabschnitten 2.3' aufgenommen ist, was dazu führt, dass das Wechselsystem X2 relativ flach aufbaut.

Figur 9 zeigt eine Schnittansicht gemäß Linie A-A der Figur 8, in zu Illustrationszwecken links gelöstem Zustand und rechts fixiertem Zustand.

Das Wechselsystem X2 funktioniert ähnlich wie das Wechselsystem X1, basiert allerdings auf einer Schiebebewegung.

Die zwei mittels des Schiebers 2' betätigbaren, in der Wandung 1.1'verschiebbar angeordneten Befestigungselemente 4' werden durch die Innenspannkontur 2.1' des Schiebers 2' nach innen gegen zwei konische, sich ins Düseninnere verjüngende Halterungsausnehmungen H2 der Düse D2 gedrückt, wodurch die Düse D2 einerseits formschlüssig fixiert wird und andererseits in Figur 9 nach axial unten gegen das elastische Dichtelement 5 und mehrere Federelemente 6 gedrückt wird. Zudem drückt das dritte, in der Wandung 1.1' verschiebbar angeordnete Befestigungselement 4" gegen eine konische, sich ins Düseninnere verjüngende Halterungsausnehmung H2 der Düse D2, wodurch die Düse D2 ebenfalls einerseits formschlüssig fixiert wird und andererseits in Figur 9 nach axial unten gegen das elastische Dichtelement 5 und mehrere. Federelemente 6 gedrückt wird.

Wird der Schieber 2' verschoben, um die Düse D2 zu lösen, schafft die profilierte Innenspannkontur 2.1' des Schiebers 2' einen Freiraum für die mittels des Schiebers 2' betätigbaren Befestigungselemente 4', in den die zwei Befestigungselemente 4' verschiebbar sind, um die Düse D2 entfernen zu können. Daraufhin kann die Düse D2 entgegen der Federkraft des dritten Befestigungselements 4" entnommen werden, wodurch zugleich die Befestigungselemente 4' in den Freiraum der Innenspannkontur 2.1' geschoben werden.

Figur 10 zeigt eine Schnittansicht des Wechselsystems X2 der Figuren 8 und 9, zu Illustrationszwecken rechts in fixiertem Zustand und links in gelöstem Zustand.

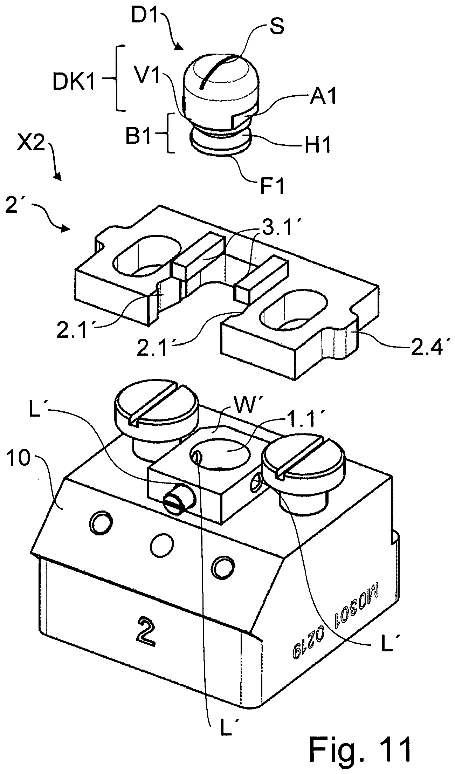

Figur 11 zeigt eine perspektivische, explosionsartige Ansicht einer wechselbaren Düse D1 und eines Wechselsystems X2 gemäß einer Ausführungsform der Erfindung, das zum Großteil dem Wechselsystem X2 der Figuren 7 bis 10 entspricht.

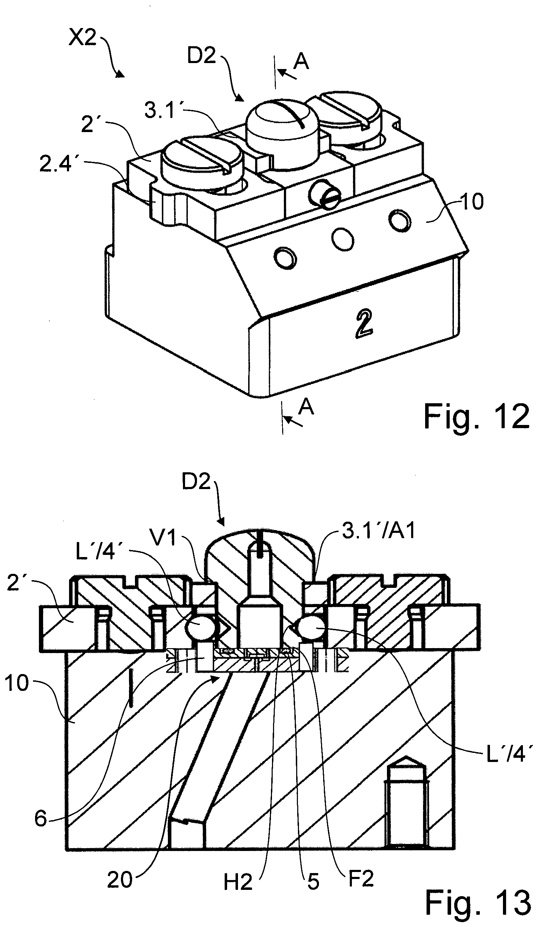

Figur 12 zeigt die Düse D2 und das Wechselsystem X2 der Figur 11 in montiertem Zustand, während Figur 13 eine Schnittansicht gemäß Linie A-A der Figur 12 zeigt.

Eine Besonderheit des in den Figuren 11 bis 13 gezeigten Wechselsystems X2 ist, dass der Schieber 2' eine Ausrichteinrichtung 3.1' zur winkelgerechten, mechanischen Ausrichtung der Düse D2 aufweist. Die Ausrichteinrichtung 3.1' ist als planarer oder geradliniger Ausrichtabschnitt einer Innengeometrie ausgeführt. Der Ausrichtabschnitt 3.1' führt dazu, dass die Düse D2 nur in winkelgerechter Ausrichtung dem Wechselsystem X2 zur Fixierung zuführbar ist. Ansonsten funktioniert das Wechselsystem X2 der Figuren 11 bis 13 wie das unter Bezugnahme auf die Figuren 7 bis 10 beschriebene Wechselsystem X2.

Allgemein ist zu erwähnen, dass die Wechselsysteme X1 und X2 sich nicht nur durch ihre Schnellwechsel- und Ausrichtfunktion auszeichnen, sondern ebenso durch ihre sehr flache Konstruktion. Die Wechselsysteme X1 und X2 können eine Aufbauhöhe von z. B. kleiner 4 cm, kleiner 3 cm oder sogar kleiner 2 cm aufweisen. Das wird insbesondere dadurch ermöglicht, dass die Einzelkomponenten relativ flach ausgeführt sind und nicht aufeinander gefügt, sondern ineinander gefügt sind.

Die Wechselsystem X1 und X2 zeichnen sich außerdem dadurch aus, dass sie sowohl für automatische Wechsel als auch für manuelle (händische) Wechsel ausgeführt sind.

Anzumerken ist nochmals, dass die Innenspannkontur 2.1, 2.1' zweckmäßig so profiliert ausgeformt ist, dass eine selbsthemmende Düsen-Fixierstellung erzielbar ist.

Figur 14 zeigt eine schematische Ansicht eines Applikationssystems 100 gemäß einer Ausführungsform der Erfindung. Das Applikationssystem 100 dient insbesondere zum Applizieren von Dichtmaterial zur Erzeugung einer Nahtabdichtung auf einer Kraftfahrzeugkarosserie 104.

Das Applikationssystem 100 umfasst einen Applikationskopf 10, an dem zumindest zwei Wechselsysteme X1 und/oder X2 wie hierin offenbart montiert sind, und einen Roboter 101, z. B. einen mehrachsigen Gelenkarmroboter, mit einer Lanze 102, die um ihre Längsachse drehbar ist und die den Applikationskopf 10 nebst den Wechselsystemen X1/X2 trägt. Die Wechselsysteme X1/X2 dienen zur Befestigung von Düsen D1 und/oder D2 wie hierin offenbart. Die Lanze 102 ist in Figur 15 detaillierter gezeigt.

Das Applikationssystem 100 umfasst ferner eine Düsenwechselstation 103 in Reichweite des Roboters 101. Die Düsenwechselstation 103 lagert mehrere Düsen D1/D2 wie hierin offenbart. Der Roboter 101 ist so konfiguriert, dass er die Wechselsysteme X1/X2 zum automatischen Wechseln der Düsen D1/D2 zu der Düsenwechselstation 103 führt, was schematisch durch den durchgezogenen Pfeil in Figur 14 gezeigt ist. Der Düsenwechsel der Düsen D1/D2 erfolgt also nicht manuell, sondern automatisch über den Roboter 101 und die Düsenwechselstation 103.

Die Düsenwechselstation 103 kann mit einer automatischen Düsenreinigungseinrichtung zum Reinigen der Düsen D1/D2 ausgestattet sein.

Figur 15 zeigt eine um ihre Längsachse drehbare Lanze 102 mit einem Applikationskopf 10 mit drei in unterschiedliche Applikationsrichtungen orientieren Düsen D1/D2 nebst zugehörigen Wechselsystem X1/X2.

Figur 16 zeigt eine schematische Schnittansicht eines Druckreduzierers 20 gemäß einer Ausführungsform der Erfindung.

Der Druckreduzierer 20 umfasst ein Leitungssystem für das Auftragsmittel. Das Leitungssystem umfasst eine Eingangsleitung 21 mit einem Auftragsmitteleingang E und zwei Ausgangsleitungen 22 mit zwei Auftragsmittelausgängen A, die zweckmäßig dazu dienen, direkt in die Düseneintrittsöffnung der Düse D1/D2 zu münden (Figuren 4, 9, 13).

Die Eingangsleitung 21 ist über zwei Verzweigungsleitungen 23 mit den zwei Ausgangsleitungen 22 verbunden, so dass das Auftragsmittel zwischen dem Auftragsmitteleingang E und dem einen Auftragsmittelausgang A mehrere Umlenkungen erfährt, vorzugsweise zumindest zwei U-Turns, und das Auftragsmittel zwischen dem Auftragsmitteleingang E und dem anderen Auftragsmittelausgang A mehrere Umlenkungen erfährt, vorzugsweise zumindest zwei U-Turns.

Dadurch kann der Druckreduzierer 20 z. B. etwa 30 bis 50 bar Druck reduzieren und ermöglicht somit insbesondere, dass hochviskoses aber auch niedrigviskoses Auftragsmaterial mit Hilfe eines Druckreglers verarbeitet werden kann. Bei mehr als einer Düse, die z. B. abdichtende Düse und die schützende Düse.

Ohne Druckreduzierer 20 fließt bei einem Steuerdruck von z. B. 0,5 bar 10 ccm/s Auftragsmaterial.

Mit Druckreduzierer 20 fließt bei einem Steuerdruck von z. B. 0,5 bar nur 1 ccm/s Material
Eine Besonderheit ist, dass der Druckreduzierer 20 in den Applikationskopf 10 zweckmäßig lösbar integriert ist und somit nicht von dem Applikationskopf 10 absteht, so dass es zu keiner TCP-Verschiebung (TCP: Tool center point) kommt (Figuren 4, 9, 13). Die Außenfläche des Druckreduzierers 20 ist vorzugsweise bündig zur Außenfläche des Applikationskopfs 10 ausgebildet.

Der Druckreduzierer 20 ist aus zwei vorzugsweise separaten Plattenteilen P1 und P2 konstruiert, was das Einarbeiten des Leitungssystems erleichtert. Er wird nur bei Bedarf eingesetzt.

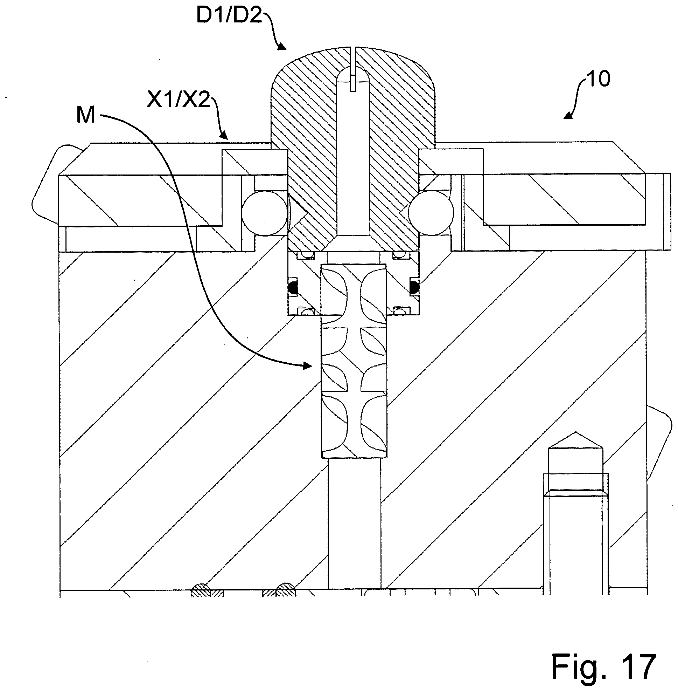

Figur 17 zeigt eine Düse D1/D2 mit Mischer M im Applikationskopf 10 gemäß einer Ausführungsform der Erfindung. Der Mischer M ist insbesondere in eine Applikationsmittelleitung im Applikationskopf 10 integriert oder am Austrittsende davon angeordnet. Der Mischer M sorgt für eine laminare Strömung des Auftragsmittels zur Düse D1/D2 hin.

### Bezugszeichenliste

- D1: Düse
- A1: Ausrichteinrichtung
- H1: Halterungseinrichtung/Halterungsausnehmung(en)
- DK1: Düsenkopf
- B1: Befestigungssockel
- F1: Stirnfläche mit Düseneintrittsöffnung
- V1: Versatz
- S: Schlitzförmige Düsenaustrittsöffnung

- D2: Düse
- H2: Halterungs- und Ausrichteinrichtung/Ausnehmung(en)
- DK2: Düsenkopf
- B2: Befestigungssockel
- F2: Stirnfläche mit Düseneintrittsöffnung
- V2: Versatz
- S: Schlitzförmige Düsenaustrittsöffnung

- L: Längs- und/oder Mittelachse der Düse

- X1: Wechselsystem
- 1.1: Aufnahme für Düse
- L: Öffnungen für Befestigungselemente
- W: Wandung
- 2: Drehriegel
- 2.1: Innenspannkontur(en)
- 2.2: Spannring
- 2.3: Dreharm(e)
- 2.4: Drehflansch(e)
- 3: Gehäuseelement
- 3.1: Innengeometrie/Ausrichtabschnitt(e)
- 4: Befestigungselement(e)
- X2: Wechselsystem
- 1.1': Aufnahme für Düse
- W': Wandung
- L': Öffnungen für Befestigungselemente
- W': Wandung
- 2': Schieber
- 2.1': Innenspannkontur(en)
- 2.2': Stegabschnitt(e)
- 2.3': Armabschnitt(e)
- 2.4': Schiebeflansch(e)
- 2.5': Langloch/Langlöcher
- 4': Ausricht- und Befestigungselement(e)
- 4": Ausricht- und Befestigungselement(e)

- 5: Dichtelement
- 6: Federelement(e)

- 10: Applikationskopf (Applikationsblock)
- M: Mischeinrichung (Mischer)

- 20: Druckreduzierer
- P1: Platte
- P2: Platte

- 100: Applikationssystem
- 101: Manipulator, insbesondere Roboter
- 102: Lanze, drehbar um ihre Längsachse
- 103: Düsenwechselstation
- 104: Bauteil, insbesondere Kraftfahrzeugkarosserie

## Patentansprüche

1. Wechselbare Düse (D1, D2) zum Applizieren eines Auftragsmittels auf ein Bauteil und zum Befestigen an einem Wechselsystem (X1, X2), wobei die Düse (D1, D2) aus einem die Düsenaustrittsöffnung (s) enthaltenden Düsenkörper besteht, der eine Längs- und Mittelachse (L) hat und Folgendes umfasst:
a) eine Ausrichteinrichtung (A1, H2), die zur in Bezug auf die Längs- und Mittelachse (L) winkelgerechten, mechanischen Ausrichtung der Düse (D1, D2) an dem Wechselsystem (X1, X2) konfiguriert ist, und
b) eine Halterungseinrichtung (H1, H2) zur lösbaren Halterung der Düse (D1, D2) an dem Wechselsystem (X1, X2), wobei die Halterungseinrichtung (H1, H2) zumindest eine Halterungsausnehmung (H1, H2) aufweist, die konisch ausgeführt ist und sich derart ins Düseninnere verjüngt, dass in Bezug auf die Längs- und Mittelachse (L) eine nicht-axiale Beaufschlagung der Halterungsausnehmung (H1, H2) eine axiale Verschiebung der Düse (D1, D2) bewirkt,
**dadurch gekennzeichnet, dass** als Ausrichteinrichtung (A1) eine rotationsunsymmetrische unrunde Außengeometrie der Düse (D1) dient und die Außengeometrie zumindest einen an der Seite der Düse (D1) ausgebildeten Ausrichtabschnitt (A1) zur winkelgerechten, mechanischen Ausrichtung der Düse (D1) aufweist, wobei der Ausrichtabschnitt (A1) geradlinig und planar an der Außenfläche der Düse (D1) ausgeführt ist zur konturparallelen Ausrichtung am Wechselsystem (X1, X2) und zu der rotationsunsymmetrischen Ausbildung der Außengeometrie der Düse (D1),
oder die Ausrichteinrichtung (H2) zumindest zwei in Umfangsrichtung der Düse (D2) voneinander beabstandete, sich konisch ins Düseninnere verjüngende Halterungsausnehmungen (H2) aufweist, so dass die Halterungsausnehmungen (H2) eine Fixierung der Düse (D2) nur in winkelgerechter Ausrichtung zulassen, und die Halterungsausnehmungen (H2) zudem zur lösbaren Halterung der Düse (D2) an dem Wechselsystem (X2) dienen, wodurch die Ausrichteinrichtung (H2) zugleich als Halterungseinrichtung (H2) zur lösbaren Halterung der Düse (D2) an dem Wechselsystem (X2) dient.

2. Düse (D1) nach Anspruch 1, wobei die Halterungsausnehmung (H1) als Halterungsnut ausgeführt ist und sich ringförmig oder zumindest abschnittsweise um die Düse (D1) herum erstreckt.

3. Düse (D1, D2) nach Anspruch 1 oder 2, wobei der Düsenkörper einen Befestigungssockel (B1, B2) aufweist und der Befestigungssockel (B1, B2)
- die Ausrichteinrichtung (A1, H2) und/oder die Halterungseinrichtung (H1, H2) umfasst, und
- als Zentrierzapfen mit zumindest abschnittsweiser kreisrunder Außenkontur ausgeführt ist.

4. Düse (D1, D2) nach einem der vorhergehenden Ansprüche, wobei der Düsenkörper zwischen einem Düsenkopf (DK1, DK2) und einem Befestigungssockel (B1, B2) einen Stufenversatz (V1, V2) aufweist und/oder der Düsenkopf (DK1, DK2) breiter ist als der Befestigungssockel (B1, B2).

5. Düse (D1, D2) nach einem der vorhergehenden Ansprüche, wobei die Düse (D1, D2) eine Schlitzdüse ist, vorzugsweise zur Herstellung von Nahtabdichtungen auf Kraftfahrzeugkarosserien.

6. Wechselsystem (X1, X2) für wechselbare Düsen (D1, D2) und zur Montage an einem Applikationsblock (10), insbesondere Dreh- oder Schiebewechselsystem,
mit einer Düse (D1, D2) nach einem der vorhergehenden Ansprüche,
und mit einer weiteren Ausrichteinrichtung (3.1, 3.1', 4', 4") zur winkelgerechten, mechanischen Ausrichtung der Düse (D1, D2).

7. Wechselsystem (X1) nach Anspruch 6, wobei als weitere Ausrichteinrichtung (3.1, 3.1') zumindest ein planarer oder geradliniger Ausrichtabschnitt zur konturparallelen Ausrichtung der Düse dient und der Ausrichtabschnitt eine winkelgerecht ausgerichtete Düse (D1, D2) zur Fixierung passieren lässt, während er eine falsch ausgerichtete Düse (D1, D2) blockiert.

8. Wechselsystem (X1, X2) nach Anspruch 6, wobei die weitere Ausrichteinrichtung (4', 4") zumindest zwei in Umfangsrichtung voneinander beabstandete, verschiebbare Befestigungselemente (4', 4") aufweist, so dass die Befestigungselemente (4', 4") eine Fixierung der Düse (D2) nur in winkelgerechter Ausrichtung zulassen, und die Befestigungselemente (4', 4") zudem zur lösbaren Halterung der Düse (D2) dienen, wodurch die weitere Ausrichteinrichtung (4', 4") zugleich als Halterungseinrichtung (4', 4") des Wechselsystems zur lösbaren Halterung der Düse (D2) dient.

9. Wechselsystem (X1, X2) nach einem der Ansprüche 6 bis 8, mit einer Aufnahme (1.1, 1.1') mit zylindrischer Innenkontur zum passgenauen Aufnehmen eines Befestigungssockels (B1, B2) der Düse (D1, D2).

10. Wechselsystem (X1, X2) nach einem der Ansprüche 6 bis 9, mit zumindest einem einwärts und auswärts verschiebbaren Befestigungselement (4, 4', 4") zur Halterung der Düse (D1, D2), wobei das Befestigungselement (4, 4', 4") vorzugsweise in einer Öffnung (L, L') der Wandung (W, W') der Aufnahme (1.1, 1.1') eingesetzt ist.

11. Wechselsystem (X2) nach Anspruch 10, wobei die Wandung (W, W') der Aufnahme (1.1, 1.1') zumindest zwei in Umfangsrichtung der Aufnahme (1.1, 1.1') voneinander beabstandete Öffnungen (L, L') aufweist, in die jeweils ein Befestigungselement (4, 4', 4") eingesetzt ist.

12. Wechselsystem (X1, X2) nach einem der Ansprüche 6 bis 11, mit einem bewegbaren Betätigungsmittel (2, 2'), das eine profilierte Innenspannkontur (2.1, 2.1') zum Beaufschlagen und Freigeben des zumindest einen Befestigungselements (4, 4', 4'') umfasst, um die Düse (D1, D2) in einen fixierten Zustand oder einen gelösten Zustand zu bringen.

13. Wechselsystem (X1, X2) nach Anspruch 12, wobei die Innenspannkontur (2.1, 2.1') ausgeformt ist, das Betätigungsmittel (2, 2') selbsthemmend in der Fixierstellung zum Fixieren der Düse (D1, D2) zu halten.

14. Wechselsystem (X1, X2) nach Anspruch 12 oder 13, wobei das zumindest eine Befestigungselement (4, 4', 4'') mittels des Betätigungsmittels (2, 2') einwärts bewegbar ist, um seitlich gegen die Düse (D1, D2) gedrückt zu werden.

15. Wechselsystem (X1) nach einem der Ansprüche 12 bis 14, wobei das Betätigungsmittel (2) ein Drehriegel ist und/oder das Wechselsystem (X1) ein Drehwechselsystem ist.

16. Wechselsystem (X1) nach Anspruch 15, wobei der Drehriegel (2) einen Spannring (2.2) aufweist, der die Innenspannkontur (2.1) aufweist und der insbesondere die Wandung (W) der Aufnahme (1.1) umgibt, und wobei der Drehriegel (2) zumindest einen Dreharm (2.3) aufweist, der von dem Spannring (2.2) absteht und mit einem Drehflansch (2.4) versehen ist, und/oder wobei eine Drehbewegung des Drehriegels (2) von kleiner 90°, kleiner 60° oder kleiner 45° ausreicht, um die Düse (D1, D2) in einen fixierten Zustand oder einen gelösten Zustand zu bringen.

17. Wechselsystem (X1) nach Anspruch 16, mit einem Gehäuseelement (3), das eine die Ausrichteinrichtung (3.1) aufweisende Eingangsöffnung für die Düse (D1) umfasst und das als Gehäuse für den Spannring (2.2) und die Aufnahme (1.1) dient.

18. Wechselsystem (X1) nach Anspruch 17, wobei die Außenkontur des Gehäuseelements (3) an zumindest einer Seite gekrümmt parallel zum Drehweg des Drehflansches (2.4) ausgeformt ist.

19. Wechselsystem (X2) nach einem der Ansprüche 6 bis 14, wobei das Betätigungsmittel (2') ein Schieber ist und das Wechselsystem ein Schiebewechselsystem (X2) ist.

20. Wechselsystem (X2) nach Anspruch 19, wobei der Schieber (2') die Innenspannkontur (2.1') aufweist und vorzugsweise die Wandung (W) der Aufnahme (1.1') an zumindest zwei Seiten umgibt,
und/oder wobei der Schieber (2') zwei über einen Stegabschnitt (2.2') miteinander verbundene Armabschnitte (2.3') aufweist, deren Innenseiten die Innenspannkontur (2.1') aufweisen und/oder mit Langlöchern (2.5') versehen sind, und/oder wobei der Schieber (2') die Ausrichteinrichtung (3.1') aufweist.

21. Wechselsystem (X1, X2) nach einem der Ansprüche 6 bis 20, mit einem elastischen Dichtelement (5), gegen das die Düse (D1, D2) im fixierten Zustand mittels zumindest eines einwärts beaufschlagten Befestigungselements (4, 4', 4'') axial gedrückt wird.

22. Wechselsystem (X1, X2) nach einem der Ansprüche 6 bis 21, mit zumindest einem Federelement (6) oder einem anderen elastischen Element, gegen das die Düse (D1, D2) im fixierten Zustand mittels zumindest eines einwärts beaufschlagten Befestigungselements (4, 4', 4'') axial gedrückt wird, und das die Düse (D1, D2) nach axial außen beaufschlagt, um das Entfernen der Düse zu unterstützen.

23. Wechselsystem (X1, X2) nach einem der Ansprüche 6 bis 22, mit einer Düsenwechselstation (103) für mehrere Düsen (D1, D2), wobei die Düsenwechselstation eine Düsenentfernungssektion aufweist, an der eine Düse (D1, D2) von dem Wechselsystem (X1, X2) automatisch entfernbar ist, und eine Düsenabgabesektion aufweist, an der eine Düse (D1, D2) automatisch an das Wechselsystem (X1, X2) montierbar ist.

24. Wechselsystem (X1, X2) nach einem der Ansprüche 6 bis 23, wobei das zumindest eine Befestigungselement (4, 4') eine Kugel umfasst oder ein zumindest abschnittsweise sphärisches oder zylindrisches Befestigungselement,
und/oder wobei das zumindest eine Befestigungselement (4") ein federbeaufschlagtes, nicht von der Innenspannkontur (2.1') beaufschlagbares Befestigungselement (4") umfasst.

25. Applikationssystem (100) zum Applizieren eines Auftragsmittels auf ein Werkstück, insbesondere Kraftfahrzeugkarosserien und/oder Anbauteile hierfür, mit einem Applikationsblock (10), an dem zumindest ein Wechselsystem (X1, X2) nach einem der Ansprüche 6 bis 24 montiert ist, zumindest einer Düse (D1, D2) nach einem der Ansprüche 1 bis 5 und einem Manipulator oder Roboter (101) mit einer Lanze (102), die um ihre Längsachse drehbar ist und den Applikationsblock (10) trägt.

26. Applikationssystem (100) nach Anspruch 25, mit einer Düsen-Wechselstation (103) für mehrere Düsen (D1, D2) nach einem der Ansprüche 1 bis 5 zum automatischen Wechseln der Düsen (D1, D2), wobei der Roboter (101) konfiguriert ist, das Wechselsystem (X1, X2) zum automatischen Wechseln der Düsen (D1, D2) zu der Düsenwechselstation (103) zu führen, und/oder mit zumindest zwei Wechselsystemen (X1, X2) und zumindest zwei in unterschiedliche Applikationsrichtungen montierten Düsen (D1, D2).

## Claims

1. Changeable nozzle (D1, D2) for applying an application agent to a component and for fastening to an change system (X1, X2), the nozzle (D1, D2) consisting of a nozzle body which contains the nozzle outlet opening (s), has a longitudinal and central axis (L) and comprises the following:
a) an alignment means (A1, H2) configured for angularly aligning the nozzle (D1, D2) on the change system (X1, X2) with respect to the longitudinal and central axes (L); and
b) a holding device (H1, H2) for releasably holding the nozzle (D1, D2) on the change system (X1, X2), the holding device (H1, H2) having at least one holding recess (H1, H2) which is of conical design and tapers into the nozzle interior in such a way that, with respect to the longitudinal and central axis (L), a non-axial action on the holder recess (H1, H2) causes an axial displacement of the nozzle (D1, D2), **characterized in that** a rotationally asymmetrical non-round outer geometry of the nozzle (D1) serves as the alignment means (A1), and the outer geometry has at least one alignment section (A1) formed on the side of the nozzle (D1) for the angularly correct, mechanical alignment of the nozzle (D1), the alignment section (A1) being straight and planar on the outer surface of the nozzle (D1) for contour-parallel alignment on the change system (X1, X2) and with the rotationally asymmetrical configuration of the outer geometry of the nozzle (D1),
or the alignment means (H2) has at least two retaining recesses (H2) which are spaced apart from one another in the circumferential direction of the nozzle (D2) and taper conically into the nozzle interior, so that the retaining recesses (H2) permit fixing of the nozzle (D2) only in angularly correct alignment, and the holding recesses (H2) also serve for releasably holding the nozzle (D2) on the change system (X2), whereby the aligning device (H2) also serves as a holding device (H2) for releasably holding the nozzle (D2) on the change system (X2).

2. Nozzle (D1) according to claim 1, wherein the holding recess (H1) is designed as a holding groove and extends annularly or at least in sections around the nozzle (D1).

3. Nozzle (D1, D2) according to claim 1 or 2, wherein the nozzle body comprises a mounting base (B1, B2) and the mounting base (B1, B2) comprises
- comprises the aligning device (A1, H2) and/or the holding device (H1, H2), and
- is designed as a centering pin with an at least sectionally circular outer contour.

4. Nozzle (D1, D2) according to one of the preceding claims, wherein the nozzle body has a support offset (V1, V2) between a nozzle head (DK1, DK2) and a fastening base (B1, B2) and/or the nozzle head (DK1, DK2) is wider than the fastening base (B1, B2).

5. Nozzle (D1, D2) according to one of the preceding claims, wherein the nozzle (D1, D2) is a slot nozzle, preferably for producing seam seals on motor vehicle bodies.

6. Change system (X1, X2) for changeable nozzles (D1, D2) and for mounting on an application block (10), in particular a rotary or sliding change system,
with a nozzle (D1, D2) according to one of the preceding claims,
and with a further alignment means (3.1, 3.1', 4', 4'') for angularly correct mechanical alignment of the nozzles (D1, D2) .

7. Change system (X1) according to claim 6, wherein at least one planar or rectilinear alignment section serves as further alignment means (3.1, 3.1') for contour-parallel alignment of the nozzle and the alignment section allows a nozzle (D1, D2) aligned at the correct angle to pass for fixing, while it blocks an incorrectly aligned nozzle (D1, D2).

8. Change system (X1, X2) according to claim 6, wherein the further alignment means (4', 4'') has at least two displaceable fastening elements (4', 4'') spaced apart from one another in the circumferential direction, so that the fastening elements (4', 4'') permit fixation of the nozzle (D2) only in angularly correct alignment, and the fixing elements (4', 4'') also serve for releasably holding the nozzle (D2), whereby the further alignment means (4', 4'') serves at the same time as a holding device (4', 4'') of the change system for releasably holding the nozzle (D2).

9. Change system (X1, X2) according to one of the claims 6 to 8, with a receptacle (1.1, 1.1') with cylindrical inner contour for precisely fitting reception of a fastening base (B1, B2) of the nozzle (D1, D2).

10. Change system (X1, X2) according to one of the claims 6 to 9, with at least one inwardly and outwardly displaceable fastening element (4, 4', 4'') for holding the nozzle (D1, D2), wherein the fastening element (4, 4', 4'') is preferably inserted in an opening (L, L') of the wall (W, W') of the receptacle (1.1, 1.1').

11. Change system (X2) according to claim 10, wherein the wall (W, W') of the receptacle (1.1, 1.1') has at least two openings (L, L') which are spaced apart from one another in the circumferential direction of the receptacle (1.1, 1.1') and into each of which a fastening element (4, 4', 4'') is inserted.

12. Change system (X1, X2) according to one of claims 6 to 11, with a movable actuating means (2, 2') comprising a profiled internal clamping contour (2.1, 2.1') for striking and releasing the at least one fastening element (4, 4', 4'') in order to bring the nozzle (D1, D2) into a fixed state or a released state.

13. Change system (X1, X2) according to claim 12, wherein the internal clamping contour (2.1, 2.1') is formed to hold the actuating means (2, 2') self-lockingly in the fixing position for fixing the nozzle (D1, D2).

14. Change system (X1, X2) according to claim 12 or 13, wherein the at least one fixing element (4, 4', 4'') is movable inwards by means of the actuating means (2, 2') to be pressed laterally against the nozzle (D1, D2).

15. Change system (X1) according to one of claims 12 to 14, wherein the actuating means (2) is a rotary latch and/or the change system (X1) is a rotary change system.

16. Change system (X1) according to claim 15, wherein the rotary latch (2) has a clamping ring (2.2) which has the inner clamping contour (2.1) and which in particular surrounds the wall (W) of the receptacle (1.1),
and/or wherein the rotary bolt (2) has at least one rotary arm (2.3) which projects from the clamping ring (2.2) and is provided with a rotary flange (2.4),
and/or wherein a rotary movement of the rotary lock (2) of less than 90°, less than 60° or less than 45° is sufficient to bring the nozzle (D1, D2) into a fixed state or a released state.

17. Change system (X1) according to claim 16, with a housing element (3) which comprises an inlet opening for the nozzle (D1) having the alignment means (3.1) and which serves as a housing for the clamping ring (2.2) and the receptacle (1.1) .

18. Change system (X1) according to claim 17, wherein the outer contour of the housing element (3) is curved on at least one side parallel to the rotary path of the rotary flange (2.4).

19. Change system (X2) according to any one of claims 6 to 14, wherein the actuating means (2') is a slide and the change system is a slide change system (X2).

20. Change system (X2) according to claim 19, wherein the slider (2') has the internal clamping contour (2.1') and preferably surrounds the wall (W) of the receptacle (1.1') on at least two sides,
and/or wherein the slider (2') has two arm sections (2.3') connected to one another via a web section (2.2'), the inner sides of which arm sections have the internal clamping contour (2.1') and/or are provided with elongated holes (2.5'), and/or wherein the slider (2') has the alignment means (3.1').

21. Change system (X1, X2) according to one of claims 6 to 20, having an elastic sealing element (5) against which the nozzle (D1, D2) is pressed axially in the fixed state by means of at least one fastening element (4, 4', 4'') acted upon inwardly.

22. Change system (X1, X2) according to one of claims 6 to 21, with at least one spring element (6) or another elastic element, against which the nozzle (D1, D2) is pressed axially in the fixed state by means of at least one fastening element (4, 4', 4'') acted upon inwardly, and which presses the nozzle (D1, D2) axially outwardly in order to assist the removal of the nozzle.

23. Change system (X1, X2) according to any one of claims 6 to 22, comprising a nozzle change station (103) for a plurality of nozzles (D1, D2), the nozzle change station comprising a nozzle removal section at which a nozzle (D1, D2) is automatically removable from the change system (X1, X2), and a nozzle delivery section at which a nozzle (D1, D2) is automatically mountable to the change system (X1, X2).

24. Change system (X1, X2) according to any one of claims 6 to 23, wherein the at least one fastening element (4, 4') comprises a ball or an at least partially spherical or cylindrical fastening element,
and/or wherein the at least one fastening element (4") comprises a spring-loaded fastening element (4") which cannot be acted upon by the internal clamping contour (2.1').

25. Application system (100) for applying an application agent to a workpiece, in particular motor vehicle bodies and/or add-on parts therefor, having an application block (10) on which at least one change system (X1, X2) according to one of claims 6 to 24 is mounted, at least one nozzle (D1, D2) according to one of claims 1 to 5, and a manipulator or robot (101) having a lance (102) which can be rotated about its longitudinal axis and carries the application block (10).

26. Application system (100) according to claim 25, comprising a nozzle changing station (103) for a plurality of nozzles (D1, D2) according to any one of claims 1 to 5 for automatically changing the nozzles (D1, D2), wherein the robot (101) is configured to guide the changing system (X1, X2) for automatically changing the nozzles (D1, D2) to the nozzle changing station (103),
and/or having at least two changing systems (X1, X2) and at least two nozzles (D1, D2) mounted in different application directions.

## Revendications

1. Buse interchangeable (D1, D2) pour l'application d'un produit d'application sur un composant et destinée à être fixée à un système de changement (X1, X2), dans laquelle la buse (D1, D2) est constituée d'un corps de buse contenant l'ouverture de sortie de buse (s), qui comprend un axe longitudinal et central (L) et qui comprend ce qui suit :
a) un dispositif d'orientation (A1, H2), qui est conçu pour l'orientation mécanique perpendiculaire de la buse (D1, D2) sur le système de changement (X1, X2) par rapport à l'axe longitudinal et central (L) et
b) un dispositif de support (H1, H2) pour le maintien amovible de la buse (D1, D2) sur le système de changement (X1, X2), dans lequel le dispositif de support (H1, H2) comprend au moins un évidement de support (H1, H2), qui est de forme conique et qui rétrécit vers l'intérieur de la buse de façon à ce que, par rapport à l'axe longitudinal et central (L), une sollicitation non axiale de l'évidement de support (H1, H2) provoque un déplacement axial de la buse (D1, D2),
**caractérisé en ce que** le dispositif d'orientation (A1) est une géométrie externe de la buse (D1) non ronde non symétrique en rotation et la géométrie externe comprend au moins une portion d'orientation (A1) réalisée sur le côté de la buse (D1), pour l'orientation perpendiculaire mécanique de la buse (D1), dans lequel la portion d'orientation (A1) est réalisée en ligne droite et de manière plane sur la surface externe de la buse (D1) pour une orientation parallèle au contour sur le système de changement (X1, X2) et pour la réalisation non symétrique en rotation de la géométrie externe de la buse (D1),
ou le dispositif d'orientation (H2) comrpend au moins deux évidements de support (H2), distants entre eux dans la direction de la périphérie de la buse (D2), se rétrécissant de manière conique vers l'intérieur de la buse, de sorte que les évidements de support (H2) permettent une fixation de la buse (D2) uniquement dans une orientation perpendiculaire,
et les évidements de support (H2) permettent en outre un maintien amovible de la buse (D2) sur le système de changement (X2), le dispositif d'orientation (H2) servant en même temps de dispositif de support (H2) pour le maintien amovible de la buse (D2) sur le système de changement (X2).

2. Buse (D1) selon la revendication 1, dans laquelle l'évidement de support (H1) est conçue comme une rainure de support et s'étend de manière annulaire et au moins à certains endroits autour de la buse (D1).

3. Buse (D1, D2) selon la revendication 1 ou 2, dans laquelle le corps de huse comprend un socle de fixation (B1, B2) et le socle de fixation (B1, B2)
- comprend le dispositif d'orientation (A1, H2) et/ou le dispositif de support (H1, H2) et
- est conçu comme un tenon de centrage avec un contour externe rond au moins à certains endroits.

4. Buse (D1, D2) selon l'une des revendications précédentes, dans laquelle le corps de buse comprend, entre la tête de buse (DK1, DK2) et un socle de fixation (B1, B2), un décalage à épaulement (V1, V2) et/ou la tête de buse (DK1, DK2) est plus large que le socle de fixation (B1, B2).

5. Buse (D1, D2) selon l'une des revendications précédentes, dans laquelle la buse (D1, D2) est une buse à fente, de préférence pour la fabrication de joints d'étanchéité à cordons sur des carrosseries de véhicules automobiles.

6. Système de changement (X1, X2) pour des buses interchangeables (D1, D2) et destiné à être monté sur un bloc d'application (10), plus particulièrement un système de changement rotation ou coulissant,
avec une buse (D1, D2) selon l'une des revendications précédentes,
et avec un autre dispositif d'orientation (3.1, 3.1', 4', 4") pour l'orientation perpendiculaire mécanique de la buse (D1, D2).

7. Système de changement (X1) selon la revendication 6, dans lequel, en tant qu'autre dispositif d'orientation (3.1, 3.1'), au moins une portion d'orientation permet l'orientation parallèle au contour de la buse et la portion d'orientation laisse passer une buse (D1, D2), orientée perpendiculairement pour la fixation, tandis qu'elle bloque une buse (D1, D2) mal orientée.

8. Système de changement (X1, X2) selon la revendication 6, dans lequel l'autre dispositif d'orientation (4', 4") comprend au moins deux éléments de fixation (4', 4") coulissants distants entre eux dans la direction de la périphérie, de sorte que les éléments de fixation (4', 4") permettent une fixation de la buse (D2) uniquement dans une orientation perpendiculaire et les éléments de fixation (4', 4") permettent en outre le maintien amovible de la buse (D2), l'autre dispositif d'orientation (4', 4") servant en même temps de dispositif de support (4', 4") du système de changement pour le maintien amovible de la buse (D2).

9. Système de changement (X1, X2) selon l'une des revendications 6 à 8, avec un logement (1.1, 1.1') avec un contour interne cylindrique pour le logement ajusté d'un socle de fixation (B1, B2) de la buse (D1, D2).

10. Système de changement (X1, X2) selon l'une des revendications 6 à 9, avec au moins un élément de fixation (4, 4', 4") coulissant vers l'intérieur et vers l'extérieur, pour le maintien de la buse (D1, D2), dans lequel l'élément de fixation (4, 4', 4") est de préférence insérée dans une ouverture (L, L') de la paroi (W, W') du logement (1.1, 1.1').

11. Système de changement (X2) selon la revendication 10, dans lequel la paroi (W, W') du logement (1.1, 1.1') comprend au moins deux ouvertures (L, L'), distantes entre elles dans la direction de la périphérie du logement (1.1, 1.1'), un élément de fixation (4, 4', 4") étant inséré dans chacune d'elles.

12. Système de changement (X1, X2) selon l'une des revendications 6 à 11, avec un moyen d'actionnement mobile (2, 2') qui présente un contour de serrage interne profilé (2.1, 2.1') pour la sollicitation et la libération de l'au moins un élément de fixation (4, 4', 4"), afin de mettre la buse (D1, D2) dans un état fixé ou dans un état détaché.

13. Système de changement (X1, X2) selon la revendication 12, dans lequel le contour de serrage interne (2.1, 2.1') est formé pour maintenir le moyen d'actionnement (2, 2') de manière autobloquante dans la position de fixation pour la fixation de la buse (D1, D2).

14. Système de changement (X1, X2) selon la revendication 12 ou 13, dans lequel l'au moins un élément de fixation (4, 4', 4") peut être déplacé vers l'intérieur à l'aide du moyen d'actionnement (2, 2') afin d'être comprimé latéralement contre la buse (D1, D2).

15. Système de changement (X1) selon l'une des revendications 12 à 14, dans lequel le moyen d'actionnement (2) est un verrou rotatif et/ou le système de changement (X1) est un système de changement rotatif.

16. Système de changement (X1) selon la revendication 15, dans lequel le verrou rotatif (2) comprend une bague de serrage (2.2) qui présente le contour de serrage interne (2.1) et qui entoure plus particulièrement la paroi (W) du logement (1.1),
et dans lequel le verrou rotatif (2) comprend au moins un bras rotatif (2.3) qui s'étend à partir de la bague de serrage (2.2) et qui est muni d'une bride rotative (2.4),
et/ou dans lequel un mouvement de rotation du verrou rotatif (2) inférieur à 90°, inférieur à 60° ou inférieur à 45° suffit pour mettre la buse (D1, D2) dans un état fixé ou dans un état détaché.

17. Système de changement (X1) selon la revendication 16, avec un élément de boîtier (3) qui comprend une ouverture d'entrée pour la buse (D1) comprenant le dispositif d'orientation (3.1) et qui sert de boîtier pour la bague de serrage (2.2) et le logement (1.1).

18. Système de changement (X1) selon la revendication 17, dans lequel le contour externe de l'élément de boîtier (3) est formé au moins sur un côté de manière incurvée parallèlement à la course de rotation de la bride rotative (2.4).

19. Système de changement (X2) selon l'une des revendications 6 à 14, dans lequel le moyen d'actionnement (2') est un coulisseau et le système de changement est un système de changement coulissant (X2).

20. Système de changement (X2) selon la revendication 19, dans lequel le coulisseau (2') présente le contour de serrage interne (2.1') et de préférence entoure la paroi (W) du logement (1.1') sur au moins deux côtés,
et/ou dans lequel le coulisseau (2') comprend deux portions de bras (2.3') reliées entre elles par l'intermédiaire d'une portion de nervure (2.2'), dont les côtés internes présentent le contour de serrage interne (2.1') et/ou sont munis de trous oblongs (2.5'),
et/ou dans lequel le coulisseau (2') comprend le dispositif d'orientation (3.1').

21. Système de changement (X1, X2) selon l'une des revendications 6 à 20, avec un élément d'étanchéité élastique (5) contre lequel la buse (D1, D2), dans l'état fixé, est comprimée axialement au moyen d'au moins un élément de fixation (4, 4', 4") sollicité vers l'intérieur.

22. Système de changement (X1, X2) selon l'une des revendications 6 à 21, avec au moins un élément de ressort (6) ou un autre élément de ressort élastique, contre lequel la buse (D1, D2), dans l'état fixé, est comprimée axialement au moyen d'au moins un élément de fixation (4, 4', 4") sollicité vers l'intérieur et qui sollicite la buse (D1, D2) axialement vers l'extérieur, afin de faciliter le retrait de la buse.

23. Système de changement (X1, X2) selon l'une des revendications 6 à 22, avec un poste de changement de buse (103) pour plusieurs buses (D1, D2), dans lequel le poste de changement de buse comprend une section de retrait de buse au niveau de laquelle une buse (D1, D2) peut être retirée automatiquement du système de changement (X1, X2) et comprend une section de distribution de buse au niveau de laquelle une buse (D1, D2) peut être montée automatiquement sur le système de changement (X1, X2).

24. Système de changement (X1, X2) selon l'une des revendications 6 à 23, dans lequel l'au moins un élément de fixation (4, 4') comprend une sphère ou un élément de fixation sphérique ou cylindrique au moins à certains endroits,
et/ou dans lequel l'au moins un élément de fixation (4") comprend un élément de fixation (4") muni d'un ressort, non sollicité par le contour de serrage interne (2.1').

25. Système d'application (100) pour l'application d'un produit d'application sur une pièce, plus particulièrement de carrosseries de véhicules automobiles et/ou des pièces rapportées, avec un bloc d'application (10), sur lequel est monté un système de changement (X1, X2) selon l'une des revendications 6 à 24, au moins une buse (D1, D2) selon l'une des revendications 1 à 5 et un manipulateur ou un robot (101) avec une lance (102), qui est rotative autour de son axe longitudinal et qui supporte le bloc d'application (10).

26. Système d'application (100) selon la revendication 25, avec un poste de changement de buse (103) pour plusieurs buses (D1, D2) selon l'une des revendications 1 à 5 pour le changement automatique des buses (D1, D2), dans lequel le robot (101) est conçu pour guider le système de changement (X1, X2) vers le poste de changement de buse (103) pour le changement automatique des buses (D1, D2),
et/ou avec au moins deux systèmes de changement (X1, X2) et au moins deux buses (D1, D2) montées dans des directions d'application différentes.
